(19) Europäisches Patentamt
European Patent Office
Office européen des brevets

(11) **EP 3 291 959 B1**

(12) **EUROPÄISCHE PATENTSCHRIFT**

(45) Veröffentlichungstag und Bekanntmachung des Hinweises auf die Patenterteilung:
**18.08.2021 Patentblatt 2021/33**

(51) Int Cl.:
**B29C 45/76** (2006.01)    **B29C 45/77** (2006.01)

(21) Anmeldenummer: **16715817.9**

(22) Anmeldetag: **29.03.2016**

(86) Internationale Anmeldenummer:
**PCT/EP2016/056822**

(87) Internationale Veröffentlichungsnummer:
**WO 2016/177513 (10.11.2016 Gazette 2016/45)**

(54) **ERMITTLUNG UND ANZEIGE VON PROZESSPARAMETERWERTEN IN EINEM SPRITZGUSSPROZESS**

DETERMINING AND DISPLAYING PROCESS PARAMETER VALUES IN AN INJECTION MOLDING PROCESS

DÉTERMINATION ET AFFICHAGE DE VALEURS DE PARAMÈTRE DE PROCESSUS DANS UN PROCESSUS DE MOULAGE PAR INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.05.2015 DE 102015107025**

(43) Veröffentlichungstag der Anmeldung:
**14.03.2018 Patentblatt 2018/11**

(73) Patentinhaber: **BTMT GmbH**
**84453 Mühldorf a. Inn (DE)**

(72) Erfinder:
• **MENSLER, Holger**
**83730 Fischbachau (DE)**

• **MÄRTL, Josef**
**85399 Goldach (DE)**

(74) Vertreter: **Beckord & Niedlich Patentanwälte PartG mbB**
**Marktplatz 17**
**83607 Holzkirchen (DE)**

(56) Entgegenhaltungen:
**EP-A1- 0 698 467       EP-A1- 0 698 467**
**DE-A1- 3 839 907       DE-A1- 3 839 907**
**JP-A- H09 272 145      JP-A- H11 232 250**
**JP-A- H11 232 250      US-A- 5 549 857**
**US-A1- 2002 188 375    US-A1- 2002 188 375**

**Beschreibung**

Die Erfindung betrifft ein Verfahren und eine Prozessparameterwert-Ermittlungseinrichtung zum Ermitteln und Visualisieren bzw. Anzeigen von Prozessparameterwerten eines Spritzgussprozesses. Zu diesen Prozessparameterwerten zählen beispielsweise bestimmte Prozesskennzahlen wie die Position einer Fließfront (auch Schmelzefront genannt) oder die Fließfrontgeschwindigkeit der Schmelze während des Spritzgussprozesses in einer Spritzform (im Folgenden auch Werkzeug genannt), aber ggf. auch weitere maschinenunabhängige Prozessparameter wie die Viskosität, die Scherspannung oder dergleichen. Darüber hinaus betrifft die Erfindung ein Verfahren zur Steuerung einer Spritzgießanlage und eine entsprechende Steuereinrichtung für eine Spritzgießanlage.

Üblicherweise wird während eines Spritzgussprozesses die Spritzgießanlage unter Nutzung einer Druckkurve gesteuert. Hierzu wird meist ein Drucksignal innerhalb einer Spritzgießmaschine in Abhängigkeit von der Zeit oder der Schneckenposition aufgenommen, wozu z. B. ein Messaufnehmer genutzt werden kann, der beispielsweise am Ende der Schnecke kurz vor der Düse angeordnet ist, aus der das Spritzgussmaterial bzw. die Schmelze in die Form eingespritzt wird. Alternativ oder zusätzlich kann der Druck auch indirekt gemessen werden, z. B. über den Hydraulikdruck eines Einspritzzylinders oder bei Verwendung eines Elektromotors über die Stromaufnahme, das Drehmoment oder dergleichen. Es wird dann versucht, über diese Kurve den Einspritzprozess zu regeln, beispielsweise so die Maschine zu steuern, dass die Kurve innerhalb einer vorgegebenen Hüllkurve bleibt, indem zu jedem Zeitpunkt ein Soll-Drucksignal oder zumindest ein bestimmter maximaler Druck vorgegeben wird. Um für einen Spritzgussprozess die idealen Steuerungsparameter, beispielsweise eine ideale Druckkurve, zu finden, um optimale Spritzgussteile zu erzeugen, sind in der Regel mehrere Test-Spritzgussprozesse erforderlich. Die erzeugten Formteile werden jeweils auf ihre Qualität hin untersucht und der Bediener der Maschine benötigt einiges an Erfahrung, um ausgehend von dieser visuellen Begutachtung der Test-Formteile die richtige Einstellung zu finden.

Um das vordere Ende des Harzes zu überwachen, welches in eine Spritzform einströmt, wird in der DE 962 18 317 T2 (EP 0 525 198 B1) vorgeschlagen, den Form-Innenraum der Spritzform in eine Vielzahl von Teilbereichen, also in Volumenabschnitte, zu unterteilen und in Abhängigkeit von einer Schneckenposition zu berechnen, welche Volumenabschnitte der Spritzform bereits gefüllt sein müssten. In der DE 962 15 634 T2 (EP 0 535 243 B1) wird vorgeschlagen, dieses Verfahren zu verwenden, um das Erreichen der einzelnen Volumenabschnitte auf einer Anzeigefläche gemeinsam mit der Schneckenposition und einer Druckverlaufskurve anzuzeigen. Auf diese Weise kann in Anbetracht des Anzeigebildschirms eine Beziehung zwischen dem Einspritzdruck und der Schneckenposition und eine Beziehung zwischen der Schneckenposition und dem Zustand des Kunstharzes in der Form sowie darüber indirekt auch eine Beziehung des Einspritzdrucks zum Zustand des Kunstharzes hergestellt werden. Bei den Berechnungen, wo sich das vordere Ende des Harzes in der Spritzform befindet, d. h. welche Abschnitte bereits gefüllt wurden, handelt es sich jedoch um eine reine Volumenbetrachtung. Ein Problem ist jedoch, dass dieses Verfahren dann nicht mehr sicher funktioniert, wenn die Schmelze - sofern mehrere Wege zur Verfügung stehen - in der Form eine Vorzugsrichtung wählt, was sehr häufig der Fall ist. Zudem ist eine solche Berechnung auch dann nicht möglich, wenn das Material kompressibel ist. Das Verhalten des Materials in der Form ist dann in der Regel nicht trivial ermittelbar. Es ist eine Aufgabe der vorliegenden Erfindung, eine Möglichkeit zu schaffen, welche die optimale Einstellung bzw. Ansteuerung einer Spritzgießmaschine erleichtert.

Diese Aufgabe wird zum einen durch ein Verfahren gemäß Patentanspruch 1 sowie durch ein Verfahren nach Patentanspruch 11 und zum anderen mit Hilfe einer Prozessparameterwert-Ermittlungseinrichtung nach Anspruch 13 sowie eine Steuereinrichtung nach Anspruch 14 gelöst.

Bei dem erfindungsgemäßen Verfahren werden zunächst geometrische Daten der Spritzform und/oder eines Formteils, welches in der Spritzform herzustellen ist, ermittelt. Dabei ist es im Prinzip egal, ob die geometrischen Daten des Formteils oder der Spritzform verwendet werden. Sofern geometrische Daten der Spritzform verwendet werden, geht es hierbei selbstverständlich immer um die geometrischen Daten der Kavität in der Spritzform, d. h. also letztlich wieder um die geometrischen Abmessungen des Formteils, da die geometrischen Daten der Kavität nur geringfügig größer als die des Formteils sind. Daher lassen sich die geometrischen Daten der Spritzform in die geometrischen Daten des Formteils umrechnen und umgekehrt.

Außerdem wird ein Spritzgussprozess unter Nutzung der Spritzform durchgeführt. Dabei werden Messwerte in Abhängigkeit von einer Einspritzzeit und/oder einer Aktorposition erfasst, beispielsweise der Druck an einer oder mehreren Stellen, oder andere Messwerte, aus denen sich in irgendeiner Weise direkt oder indirekt Aussagen über den Verlauf der Fließfront innerhalb der Spritzform treffen lassen. Diese Messwerte können auf verschiedene Weise erfasst werden, wie später noch erläutert wird. Die Aktorposition repräsentiert dabei beispielsweise die Position einer Schnecke oder eines anderen Aktors in der Spritzgießanlage, mittels der in die Spritzform eingespritzt wird. Das heißt, der Aktor drückt in der Regel das Spritzgussmaterial aus der Spritzgießanlage in die Spritzform. Da der Aktor gesteuert wird und jede Position des Aktors mit einer bestimmten Einspritzzeit verknüpft ist, ist die zeitliche Abhängigkeit der Messwerte von der Einspritzzeit letztlich gleichbedeutend mit der Abhängigkeit von der Aktorposition.

Weiterhin wird als ein erster Prozessparameter eine Fließfrontposition innerhalb der Spritzform bzw. des Formteils in Abhängigkeit von der Einspritzzeit und/oder der Aktorposition ermittelt. Die Fließfrontposition ist dabei eine Ortsangabe, die eine Position einer Schmelzefront des Spritzgussmaterials in der Spritzform definiert. Dabei kann es sich um eine einfache Positionsangabe handeln, wenn z. B. nur ein eindimensionaler Fließweg betrachtet werden soll. Prinzipiell kann es sich aber auch um eine ganze Schar von Positionsdaten handeln, die definieren, wo sich die Schmelzefront bzw. Fließfront innerhalb der Kavität des Werkzeugs befindet, beispielsweise um alle Positionsdaten einer Vielzahl von Punkten auf der Schmelzefront. Die Ermittlung der Fließfrontposition erfolgt dabei auf Basis der zuvor ermittelten Messwerte und der geometrischen Daten der Spritzform. Verschiedene Varianten hierzu werden später noch erläutert.

Gegebenenfalls kann zusätzlich auch die Fließfrontgeschwindigkeit jeweils in Abhängigkeit von der Fließfrontposition und somit auch in Abhängigkeit von der Einspritzzeit und/oder der Aktorposition als Prozessparameterwert ermittelt werden.

Zusätzlich können optional neben den Fließfrontpositionen selbst und ggf. den Fließfrontgeschwindigkeiten noch weitere Prozessparameterwerte in der Spritzform in Abhängigkeit von der Einspritzzeit und/oder der Aktorposition und/oder der Fließfrontposition ermittelt werden. Dabei kann es sich um die in den jeweiligen (Fließfront-)Positionen während des Einspritzens vorherherrschenden Drücke, Temperaturen etc. handeln, aber insbesondere auch um rheologische Größen, wie sie später noch erläutert werden. All diese Daten können aus der Fließfrontposition bzw. den Fließfrontgeschwindigkeiten ermittelt bzw. berechnet werden. Vorzugsweise handelt es sich hierbei um maschinenunabhängige Größen.

Schließlich wird im Rahmen des erfindungsgemäßen Verfahrens zumindest ein Teil der ermittelten Prozessparameterwerte in Abhängigkeit von der Einspritzzeit und/oder Aktorposition und/oder Fließfrontposition, beispielsweise innerhalb der Spritzform bzw. des Formteils, auf einer Anzeigeeinrichtung angezeigt. Hierzu wird die Anzeigeeinrichtung entsprechend angesteuert.

Mit Hilfe des erfindungsgemäßen Verfahrens hat der Bediener die Möglichkeit, einen Spritzgussprozess relativ schnell zu optimieren. Beispielsweise könnte er an einem zunächst erzeugten Formteil, an dessen Geometrie ja die einzelnen Fehlerstellen sichtbar sind, bei einer Visualisierung des durchlaufenen Spritzgussprozesses zur Erzeugung dieses Formteils die einzelnen Prozessparameterwerte an den jeweiligen (Fließfront-)Positionen und den damit zusammenhängenden Einspritzzeiten und/oder Aktorpositionen genauer prüfen. Damit wird es erheblich einfacher erkennbar, welche Änderungen im Steuerungsprozess erforderlich wären, beispielsweise wie eine Solldruckkurve oder Sollvorschubgeschwindigkeitskurve des Aktors zu verändern ist, um bei einem weiteren Spritzgussprozess die Qualität des Formteils an dieser Position zu verbessern und die Fehlstellen bei dem nachfolgenden Spritzgussprozess auszugleichen. Auf diese Weise kann Ausschuss reduziert werden.

Eine Prozessparameterwert-Ermittlungseinrichtung, die für das erfindungsgemäße Verfahren eingesetzt werden kann, benötigt zum einen eine erste Schnittstelle zum Ermitteln von geometrischen Daten der Spritzform und/oder des Formteils. Bei dieser Schnittstelle kann es sich um eine Benutzerschnittstelle handeln, über die ein Bediener die erforderlichen Daten eingeben kann, oder eine andere Schnittstelle, über die beispielsweise CAD-Daten übernommen werden, oder dergleichen.

Weiterhin wird eine zweite Schnittstelle zur Erfassung von Messwerten in Abhängigkeit von der Einspritzzeit und/oder der Aktorposition während eines Spritzgussprozesses in einer Spritzgießanlage unter Nutzung der Spritzform benötigt.

Schließlich benötigt die Prozessparameterwerte-Ermittlungseinrichtung eine Auswertungseinheit zum Ermitteln einer Fließfrontposition innerhalb der Spritzform bzw. des Formteils in Abhängigkeit von der Einspritzzeit und/oder der Aktorposition auf Basis der erhaltenen Messwerte und der geometrischen Daten der Spritzform. Diese Auswertungseinheit kann ggf. zusätzlich die Fließfrontgeschwindigkeiten und/oder optional weitere Prozessparameterwerte ermitteln.

Schließlich wird eine Anzeigen-Ansteuerungseinrichtung benötigt, die dazu dient, eine Anzeigeeinrichtung in geeigneter Weise anzusteuern, so dass dort zumindest ein Teil der ermittelten Prozessparameterwerte in Abhängigkeit von der Einspritzzeit und/oder Aktorposition und/oder Fließfrontposition visualisiert bzw. angezeigt wird. Dass "ein Teil" der ermittelten Prozessparameterwerte anzeigt wird, bedeutet dabei, dass nicht alle Typen von Prozessparameterwerten und/oder dass nicht alle ermittelten Prozessparameterwerte des angezeigten Typs einzeln angezeigt werden. D. h., dass z. B. nur die Fließfrontposition oder nur die Fließfrontgeschwindigkeit angezeigt werden oder sogar nur die optionalen weiteren Prozessparameter, beispielsweise in Form von Kurven, in Form von Markierungen innerhalb einer virtuellen Spritzform bzw. einem virtuellen Formteil, wie dies später noch erläutert wird, etc. Bevorzugt wird aber ein Bezug zur jeweiligen Fließfrontposition mit visualisiert.

Mit Hilfe des oben beschriebenen erfindungsgemäßen Verfahrens kann insbesondere auch ein erfindungsgemäßes Verfahren zur Steuerung einer Spritzgießanlage realisiert werden.

Dabei werden nach dem oben beschriebenen Verfahren in einem ersten Spritzgussprozess mit einer bestimmten Spritzform zumindest die Fließfrontposition und ggf. die Fließfrontgeschwindigkeit sowie optional weitere Prozessparameter innerhalb der Spritzform bzw. des Formteils in Abhängigkeit jeweils von der Einspritzzeit und/oder Aktorposition ermittelt und zumindest ein Teil dieser Prozessparameterwerte werden auf einer Anzeigeeinrichtung angezeigt.

Außerdem wird eine Variation einer Prozesssteuerparameterfunktion in Abhängigkeit von der Einspritzzeit und/oder Aktorposition unter Nutzung der angezeigten Fließfrontposition und/oder Fließfrontgeschwindigkeit und/oder weiteren Prozessparameterwerte angeboten. Bei Empfang eines entsprechenden Steuerungssignals wird dann die so variierte Prozesssteuerparameterfunktion in einer Steuereinrichtung der Spritzgießanlage für einen weiteren Spritzgussprozess mit dieser Spritzform verwendet.

Hierbei ist zu berücksichtigen, dass ja mit den Positionen bzw. Fließfrontpositionen innerhalb der Spritzform bzw. des Formteils bestimmte Einspritzzeiten und/oder Aktorpositionen verknüpft sind. Somit kann unter Nutzung auch einer angezeigten Fließfrontposition bzw. Fließfrontgeschwindigkeit oder weiterer Prozessparameterwerte innerhalb der virtuellen Spritzform oder des virtuellen Formteils genau dafür gesorgt werden, dass die Prozesssteuerungsparameterfunktion derart variiert wird, dass sich an einer definierten Position innerhalb der Spritzform bzw. des Formteils die gewünschte Änderung der Prozesssteuerungsparameterfunktion einstellt.

Unter einer Prozesssteuerungsparameterfunktion ist dabei jede Funktion zu verstehen, die einen Parameter vorgibt, gemäß dem der Spritzgussprozess direkt oder indirekt gesteuert werden kann. Dabei kann es sich insbesondere auch beispielsweise um einen ermittelten Prozessparameter wie z. B. die Fließfrontgeschwindigkeit selber handeln. Der betreffende Prozessparameter kann Eingangswert bzw. Sollgröße für den nachfolgenden Spritzgussprozess zur Verfügung gestellt. Dabei können mit der Prozesssteuerungsparameterfunktion beliebige funktionelle Abhängigkeiten des Prozessparameterwerts vorgeben, beispielsweise eine konstante Funktion oder eine definierte Erhöhung oder Erniedrigung des Prozessparameterwerts, wenn die Fließfront eine bestimmte Position erreicht hat bzw. nach einer bestimmten Einspritzzeit bzw. bei einer bestimmten Aktorposition. Das Gleiche kann für andere Prozessparameterwerte gelten, beispielsweise rheologische Größen wie die Viskosität des Spritzgussmaterials. Unter einer indirekten Steuerung ist dabei zu verstehen, dass eine Steuerungsfunktion für einen direkt einstellbare Prozesssteuerungsparameter, wie Druck oder Einspritzgeschwindigkeit (z. B. Aktorposition in Abhängigkeit von der Zeit), auf Basis der gewünschten Prozesssteuerungsparameterfunktion für den zu kontrollierenden Prozesssteuerungsparameter, wie z. B. die Fließfrontgeschwindigkeit, berechnet und angewendet wird.

Unter einem Anbieten einer Variation einer Prozesssteuerungsparameterfunktion ist hierbei zu verstehen, dass dem Bediener über eine Benutzerschnittstelle Mittel bereit gestellt werden, entsprechend unter Nutzung der angezeigten Fließfrontpositionen und/oder Fließfrontgeschwindigkeiten und/oder weiteren Prozessparameterwerten die Prozesssteuerungsparameterfunktion einzustellen, beispielsweise auf einem Touchpad oder dergleichen, auf dem die verschiedenen Prozessparameterwerte angezeigt werden. Verschiedene Varianten werden hierzu später noch anhand von Ausführungsbeispielen erläutert. Durch eine Betätigung einer (virtuellen) Taste oder dergleichen durch den Bediener kann dann das Steuerungssignal erzeugt werden, damit die optimierte Steuerungsparameterfunktion für den nachfolgenden Spritzgussprozess übernommen wird.

Für die Durchführung des Steuerungsverfahrens wird vorzugsweise eine Steuereinrichtung verwendet, welche eine zuvor beschriebene Prozessparameterwert-Ermittlungseinrichtung umfasst, um in der beschriebenen Weise die Prozessparameterwerte für einen ersten Spritzgussprozess mit einer Spritzform zu ermitteln und zumindest teilweise auf einer Anzeigeeinrichtung anzuzeigen. Weiterhin ist die Steuereinrichtung dann so ausgebildet, dass in der beschriebenen Weise die Variation der Prozesssteuerungsparameterfunktion unter Nutzung der angezeigten Fließfrontpositionen und/oder Fließfrontgeschwindigkeiten und/oder weiteren Prozessparameter angeboten werden und ein Steuerungssignal empfangen werden kann, welches dazu führt, dass die Prozesssteuerungsparameterfunktion dann für einen weiteren Spritzgussprozess mit dieser Spritzform in der Steuereinrichtung verwendet wird.

Die einzelnen Komponenten der Prozessparameterwert-Ermittlungseinrichtung und der Steuereinrichtung können dabei vorzugsweise, zumindest teilweise, in Form von Software realisiert sein. Dies betrifft insbesondere die Auswertungseinheit und die Anzeigen-Ansteuerungseinrichtung der Prozessparameterwert-Ermittlungseinrichtung. Alle Komponenten können in Form von Softwaremodulen, welche entsprechend zusammenarbeiten, auf einer eigenen Rechnereinheit, beispielsweise einer CPU, oder auf einer Rechnereinheit der bereits vorhandenen Steuerung der Spritzgießanlage realisiert sein. Auch die Schnittstellen können ganz oder zumindest teilweise in Form von Software realisiert sein, je nachdem, um welche Art von Schnittstellen es sich handelt, beispielsweise ob fertige Daten von einem anderen Softwaremodul übernommen werden sollen oder ob eine Eingabe durch einen Benutzer erforderlich ist oder Messdaten aufgenommen werden müssen. Grundsätzlich ist es aber auch möglich, einzelne oder alle Komponenten in Form von Hardware auszubilden, beispielsweise die einzelnen Module als FPDAs oder dergleichen. Es wird an dieser Stelle explizit darauf hingewiesen, dass die Komponenten der Prozessparameterwert-Ermittlungseinrichtung und/oder Steuereinrichtung auch räumlich auf verschiedenen Einrichtungen verteilt sein können und dabei insbesondere, wie dies bereits erwähnt wurde, auch Ressourcen oder Komponenten von bereits vorhandenen Steuereinrichtungen, Überwachungseinheiten oder sonstigen Einrichtungen der Spritzgießanlage mitverwendet werden können.

Mit Hilfe einer solchen Prozessparameterwert-Ermittlungseinrichtung und/oder der Steuereinrichtung kann auch eine erfindungsgemäße Spritzgießanlage aufgebaut werden, welche neben der Prozessparameterwert-Ermittlungseinrichtung die üblichen Komponenten aufweist, insbesondere eine Spritzgießdüse, einen Aktor, beispielsweise eine Schnecke oder dergleichen, um Spritzgussmaterial aus der Spritzgießdüse in eine an die Spritzgießanlage angeschlossene Spritzform einzuspritzen, wobei die Steuereinrichtung u.a. zur Ansteuerung des Aktors dient. Die Prozessparameterwert-Ermittlungseinrichtung kann dabei wie erwähnt ganz oder teilweise Teil der Steuereinrichtung sein. Es wird an dieser Stelle darauf hingewiesen, dass unter dem Begriff "steuern" im Folgenden auch der Begriff "regeln" zu fassen ist, wobei eine Regelung als eine Form der Steuerung mit einer Rückkopplung eines Werts, auf den geregelt werden soll, verstanden wird.

Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen einer anderen Kategorie weitergebildet sein können und Merkmale verschiedener Ausführungsbeispiele zu neuen, nicht explizit dargestellten Ausführungsbeispielen kombiniert werden können.

Vorzugsweise wird im Rahmen des erfindungsgemäßen Verfahrens zumindest die Position der Fließfront auf der Anzeigeeinrichtung virtuell innerhalb einer virtuellen Spritzform und/oder eines virtuellen Formteils bzw. einer virtuellen Formteilgeometrie dargestellt. Diese Darstellung erfolgt besonders bevorzugt dynamisch. D. h. die Fließfrontposition wird beispielsweise in einer Animation als Film oder Slideshow (als einzelne Bilder) oder dergleichen angezeigt.

Ebenso kann bevorzugt auch die Fließfrontgeschwindigkeit und/oder zumindest einer der weiteren Prozessparameterwerte, vorzugsweise als farb- oder graustufenkodierte Werte in Abhängigkeit von der Fließfrontposition innerhalb der virtuellen Spritzform und/oder eines virtuellen Formteils angezeigt werden. Auf diese Weise kann der Bediener sehr leicht sehen, an welchen Stellen innerhalb der Spritzform bzw. des Formteils welche Prozessparameterwerte vorliegen, und entsprechend hierauf reagieren.

Mit dem erfindungsgemäßen Verfahren können verschiedene Prozessparameterwerte ermittelt und angezeigt werden. Um zum einen die Qualität noch besser kontrollieren oder steuern zu können und zum anderen mit einem bestimmten Werkzeug leichter die Spritzgießmaschine wechseln zu können, beispielsweise bei Standortwechsel einer Produktion, ist es wünschenswert, auch maschinenunabhängige Messkennzahlen bzw. Prozessparameterwerte zu ermitteln und anzuzeigen, die für den Spritzgussprozess im Werkzeug charakteristisch sind. Besonders bevorzugt handelt es sich hierbei um zumindest eine der folgenden rheologischen Größen:

- Schergeschwindigkeit,
- Schmelzeviskosität,
- Wandschubspannung.

All diese Prozessparameter, d. h. die Fließfrontposition als solches, die Fließfrontgeschwindigkeit aber auch die weiteren Prozessparameterwerte können jeweils - wie bereits erläutert - auch als Prozesssteuerungsparameter, d. h. als Eingangswerte, für nachfolgende Spritzgussprozesse verwendet werden. Zusätzlich können aber auch weitere Prozesssteuerungsparameterwerte in Abhängigkeit von der Einspritzzeit und/oder Aktorposition und/oder Fließfrontposition (beispielsweise innerhalb der virtuellen Spritzform und/oder eines virtuellen Formteils) angezeigt werden. Dabei kann es sich beispielsweise um Prozesssteuerungsparameterwerte handeln, die z. B. bei der Durchführung des Spritzguss-Prozesses unter Nutzung der Spritzform zum Erfassen der Messwerte verwendet wurden oder die - wie nachfolgend noch erläutert - im Rahmen einer Simulation zur Visualisierung des Spritzgußprozesses genutzt wurden.

Ein Beispiel hierfür wäre die Anzeige eines Parameterwerts, der direkte zur Steuerung verwendet werden kann, wie z. B. die Aktorvorschubgeschwindigkeit bzw. Einspritzgeschwindigkeit. Ebenso sind aber auch andere Prozessparameterwerte wie z. B. der Druck in der Schnecke etc. anzeigbar. Werden diese Größen zusätzlich direkt angezeigt, kann der Benutzer diese Prozesssteuerungsparameterwerte auch direkt analysieren, um zu ermitteln bzw. leichter zu verstehen, wie diese auf die Prozessparameterwerte innerhalb der Spritzform, wie z. B. die Fließfrontposition, die Fließfrontgeschwindigkeiten, die Schergeschwindigkeit, Schmelzeviskosität oder Wandschubspannung wirken.

Ganz besonders bevorzugt ist es, wenn der Bediener zu bestimmten Fließfrontpositionen Steuerbefehle für nachfolgende Spritzgussprozesse eingeben kann, um eine Prozesssteuerungsparameterfunktion gezielt zu variieren. Vorzugsweise ist es dabei möglich, unmittelbar mit Hilfe der angezeigten Prozessparameterwerte dieselben auch für einen nachfolgenden Spritzgussprozess zu verändern bzw. entsprechende Prozesssteuerungsparameterwerte einzugeben, so dass die Prozessparameterwerte in der gewünschten Weise geändert werden.

Hierzu kann sich der Bediener beispielsweise in der Animation, z. B. einem Film oder in einer Slideshow jeweils den Verlauf der Fließfront in Abhängigkeit von der Einspritzzeit (Maschinenzeit) und/oder einer Aktorposition anzeigen lassen, kann die Animation zu einem bestimmten Zeitpunkt bzw. Bild anhalten und Steuerbefehle bzw. Prozesssteuerungsparameterwerte eingeben, die dann der jeweiligen Spritzgusszeit bzw. Aktorposition zugeordnet werden (um z. B. eine Prozesssteuerungsparameterfunktion hier zu verändern). Bei einem nachfolgenden Spritzgussprozess erfolgt die Steuerung der Spritzgießanlage bzw. des Aktors gemäß diesen neuen Steuerbefehlen bzw. neuen Prozesssteuerungsparameterfunktion. Beispielsweise könnte der Bediener festlegen, dass genau dann, wenn die Schmelzefront an einer bestimmten Stelle in der Spritzform eintrifft oder diese passiert hat, die Einspritzgeschwindigkeit, d. h. die Vorschubgeschwindigkeit des Aktors, erhöht oder erniedrigt wird.

In dem erfindungsgemäßen Steuerungsverfahren wird also bevorzugt mittels einer Benutzerschnittstelle unter Nutzung der Anzeigeeinrichtung zumindest eine Position bzw. Fließfrontposition innerhalb der Spritzform bzw. des Formteils markiert wird (z. B. indem die Anzeige so gesteuert wird, dass die Fließfront an der Position steht). Mit dieser Position kann dann eine Fließfrontgeschwindigkeit und/oder ein weiterer Prozessparameterwert bzw. ein Prozesssteuerungsparameterwert verknüpft sein, der dann gezielt auch verändert werden kann. Vorzugsweise kann die Anzeigeeinrichtung hierzu als graphische Benutzeroberfläche ausgebildet sein, besonders bevorzugt als Touchscreen oder dergleichen.

Neben der Visualisierung der Fließfrontpositionen und Fließfrontgeschwindigkeiten innerhalb einer virtuellen Spritzform bzw. eines virtuellen Formteils könnten zusätzlich ein oder mehrere Diagramme für die Prozesssteuerungsparameterfunktionen gezeigt werden, die z. B. Druck, Temperatur etc. an bestimmten Messstellen und/oder die Einspritzgeschwindigkeit bzw. Vorschubgeschwindigkeit des Aktors in Abhängigkeit von der Einspritzzeit bzw. der Aktorposition. Auch hiermit kann mit wieder eine Veränderung der Prozesssteuerungsparameterfunktionen für einen nachfolgenden Spritzgussprozess angeboten werden. Wählt der Benutzer z. B. eine bestimmte Fließfrontposition in der virtuellen Spritzform bzw. dem virtuellen Formteil aus, kann vorzugsweise entsprechend parallel dazu in den Diagrammen die Einspritzzeit bzw. Aktorposition markiert werden. Der Benutzer könnte dann hier für die jeweilige Einspritzzeit bzw. Aktorposition einen Prozesssteuerungsparameterwert wie beispielsweise die Vorschubgeschwindigkeit oder dergleichen variieren und so eine verbesserte Prozesssteuerungsparameterfunktion erstellen.

Besonders bevorzugt kann mit den neuen Prozesssteuerungsparameterwerten bzw. der neuen Prozesssteuerungsparameterfunktion zunächst ein Spritzgussprozess numerisch berechnet bzw. simuliert werden und das Ergebnis der Simulation kann dann auf der Anzeigeeinrichtung visualisiert werden. So ist es beispielsweise für den Bediener leichter möglich, abzuschätzen, ob mit den eingestellten Werten ein besseres Ergebnis erreicht wird. Anschließend kann der Bediener dann die eingestellte optimierte Prozesssteuerparameterfunktion übernehmen.

Um die Fließfrontposition, die Fließfrontgeschwindigkeit und weitere, insbesondere die oben genannten, Prozessparameterwerte in der Spritzform zu ermitteln, können unterschiedliche Verfahren genutzt werden. Hierzu können je nach Verfahren die Messwerte an Messpositionen außerhalb oder innerhalb der Spritzform ermittelt werden.

Vorzugsweise umfassen diese Messwerte Druckwerte und/oder Temperaturwerte. Hierzu können Drucksensoren und/oder Temperatursensoren beispielsweise direkt in der Kavität der Spritzform angebracht werden. Mit Hilfe eines solchen Sensors kann festgestellt werden, zu welchem Zeitpunkt die Schmelzefront am Sensor ankommt. Sind die Positionen der Punkte im Werkzeug bekannt, können die Fließfrontpositionen und somit die Fließfrontgeschwindigkeit bestimmt werden. Mit Hilfe der Fließfrontpositionen, Fließfrontgeschwindigkeiten und oder Drücken können wiederum die Viskosität, die Schergeschwindigkeit und die Schubspannung für das jeweilige Spritzgussmaterial in dem betreffenden Werkzeug berechnet werden. Wird die Spritzgießmaschine dann gewechselt, könnten prinzipiell diese Werte wieder verwendet werden, um den Spritzgussprozess mit dem betreffenden Werkzeug an der neuen Maschine zu optimieren. Hierzu muss jedoch jedes Werkzeug bzw. jede Kavität im Werkzeug mit entsprechenden Sensoren ausgestattet werden muss, was die Werkzeuge extrem teuer macht. Zwischen den einzelnen Messpunkten können die Fließfrontpositionen bzw. Fließfrontgeschwindigkeiten dann interpoliert werden.

Ebenso können aber auch alle anderen Werte verwendet werden, die Informationen über den Verlauf der Fließfrontposition und/oder der Fließfrontgeschwindigkeit im Werkzeug bzw. den Kavitäten enthalten. Bei einer weiteren Variante wird z. B. eine Röntgeneinrichtung verwendet, die Röntgenprojektionswerte als Messwerte erfasst. Beispielsweise kann mit Hilfe von Röntgenstrahlung wie in einem Film die Füllung der Spritzform während des Spritzgussprozesses aufgezeichnet werden. Auch hier sind anstelle eines Films selbstverständlich Einzelaufnahmen zu bestimmten Zeitpunkten möglich, um daraus dann z. B. durch eine Interpolation die Positionen und Geschwindigkeiten zwischen den Bildern zu erfassen. Ebenso könnten Ultraschallaufmessungen gemacht werden.

Bei einer besonders bevorzugten Variante reicht es aus, alleine Messwerte außerhalb der Spritzform zu nehmen, beispielsweise den Druck innerhalb des Schneckenvorraums oder dergleichen, wie dies später noch erläutert wird.

Bei dieser besonders bevorzugten Methode wird unter Nutzung der geometrischen Daten der Spritzform und/oder des Formteils, welches in der Spritzform herzustellen ist, zunächst eine (theoretische) virtuelle formteilspezifische Druckkurve ermittelt. Wie später noch erläutert wird, kann dies z. B. durch eine analytische Berechnung oder numerisch erfolgen, beispielsweise mittels einer Simulation. Diese formteilspezifische Druckkurve definiert dabei jeweils den Druck über einer "virtuellen" Zeit, die die Einspritzzeit bzw. Maschinenzeit bezogen auf einen bestimmten Startzeitpunkt und/oder eine (virtuelle) Aktorposition repräsentiert. Dieser Startzeitpunkt kann beispielsweise so definiert sein, dass die Schmelzefront in den Angusskanal eintritt oder die Formteilanschnittstelle in der Kavität passiert oder dergleichen.

Auf Basis dieser virtuellen formteilspezifischen Druckkurve wird dann ein formteilspezifisches Ereignismuster ermittelt. Dieses formteilspezifische Ereignismuster umfasst eine Mehrzahl von singulären virtuellen Ereignissen, die mit charakteristischen Ereignisstellen der Formteilgeometrie verknüpft sind. Den virtuellen Ereignissen sind dabei jeweils zumindest eine relative Zeitinformation und/oder eine virtuelle Aktorposition sowie zumindest ein Positionsdatum zugeordnet. Im Prinzip repräsentiert die Zeitinformation auch wie oben erläutert die Position des Aktors der Spritzgießanlage, welcher das Spritzgussmaterial aus der Spritzgießanlage in die Spritzform drückt.

Ein Positionsdatum entspricht dabei wieder einer Ortsangabe, die eine Position einer Schmelzefront bzw. Fließfront des Spritzgussmaterials in der Spritzform definiert. Dabei kann es sich um eine einfache Positionsangabe handeln oder um eine ganze Schar von Positionsdaten, die definieren, wo sich die Schmelzefront innerhalb der Kavität des Werkzeugs befindet, beispielsweise um alle Positionsdaten einer Vielzahl von Punkten auf der Schmelzefront, bei einer FEM-Simulation beispielsweise der Knotenpunkte auf der Schmelzfront. Die Zeitinformation und das Positionsdatum können gemeinsam ggf. mit weiteren Parametern auch in einem Ereignisvektor für jedes einzelne Ereignis festgehalten werden.

Unter einem "singulären" Ereignis ist hierbei ein einzelnes zeitliches Ereignis zu verstehen, das auftritt, wenn die Schmelzefront eine bestimmte charakteristische Ereignisstelle innerhalb der Kavität erreicht. Üblicherweise liegen nämlich auf dem Fließweg in der Kavität der Form Veränderungen der Formteilgeometrie vor, insbesondere des Fließwegquerschnitts, wie z. B. Verjüngungen, Vergrößerungen, Kanten, Ecken, Rundungen, Fließhindernisse etc. Diese signifikanten Geometrieänderungen führen bei Durchströmen der Schmelze zu einer signifikanten Veränderung des Verhaltens bezüglich der Druckkurve. Daher werden diese Stellen als "Ereignisstellen" bezeichnet und das Eintreffen bzw. Durchschreiten dieser Ereignisstelle durch die Fließfront als "singuläres Ereignis". Solche singulären Ereignisse können auch in Form von eng aneinander liegenden Ereignisgruppen auftreten, welche eine Anzahl von in sehr kurzen Zeitabständen bzw. Aktorpositionsabständen hintereinander auftretenden Ereignissen umfassen. Die beim Durchschreiten des Fließwegs auftretende Abfolge von Ereignissen bildet dann das Ereignismuster, welches für die Spritzform charakteristisch ist wie eine Art "Fingerabdruck". Dabei ist es durchaus möglich, dass sich, wenn die Form z. B. verschiedene Fließwege aufweist, mehrere Teil-Ereignismuster zu einem Gesamt-Ereignismuster überlagern, wobei jedes Ereignismuster einem bestimmten Fließweg zugeordnet sein kann. Die Ermittlung eines formteilspezifischen Ereignismusters im Sinne der Erfindung kann daher sowohl die Erfassung bzw. Ermittlung des Gesamt-Ereignismusters als auch nur die Ermittlung eines oder mehrerer Teil-Ereignismuster entlang bestimmter Fließwege umfassen.

Aus den Messdaten, die dann bei dem realen Spritzgussprozess unter Nutzung der betreffenden Spritzform gewonnen werden, wird dann eine Mess-Druckkurve ermittelt. Diese Mess-Druckkurve kann bei herkömmlichen Spritzgießanlagen wie erwähnt direkt in der Maschine, beispielsweise durch einen Druckaufnehmer im Schneckenvorraum, oder durch eine indirekte Druckmessung über hydraulischen Druck am Einspritzzylinder oder Messung von Parametern des Einspritzmotors etc., Dehnungsmessstreifen oder anderem erfolgen. Prinzipiell ist es auch möglich, hierzu zusätzliche Messsensoren in der Spritzform zu verwenden, dies ist hier aber vorteilhafterweise nicht erforderlich.

Auf Basis dieser realen Messdruck-Kurve für den durchgeführten Spritzgussprozess kann dann in ähnlicher Weise wie bei der Ermittlung des formteilspezifischen Ereignismusters auf Basis der virtuellen formteilspezifischen Druckkurve nun auch ein Mess-Ereignismuster ermittelt werden. Das Mess-Ereignismuster weist eine Mehrzahl von singulären Mess-Ereignissen auf, denen wieder zumindest eine Zeitinformation und/oder Aktorposition zugeordnet ist, d. h. beispielsweise eine bestimmte Spritzgießzeit bzw. Maschinenzeit seit Beginn des Spritzgussprozesses oder ein ähnlicher Startpunkt. Auch hier können die Spritzgießzeit bzw. Maschinenzeit und/oder die Aktorposition ggf. auch gemeinsam mit weiteren Parametern in einem Ereignisvektor für das Messereignis hinterlegt werden.

Es werden dann virtuelle Ereignisse des formteilspezifischen Ereignismusters zu Mess-Ereignissen des Mess-Ereignismusters zugeordnet. Wie später noch erläutert wird, kann dies z. B. durch ein Vergleichen der jeweiligen Ereignismuster erfolgen oder indem das formteilspezifische Ereignismuster im Mess-Ereignismuster gesucht wird oder dergleichen. Dabei ist zu beachten, dass die Muster zu diesem Zeitpunkt nicht zwingend identisch sein müssen, wenn beispielsweise das ermittelte formteilspezifische Ereignismuster nur einen bestimmten Fließweg oder nur bestimmte Ausschnitte aus dem Fließweg berücksichtigt, und das Mess-Ereignismuster beispielsweise einen größeren Bereich für weitere Fließwege abdeckt. Ebenso müssen die absoluten Zeiten zwischen den Ereignissen eines Ereignismusters nicht übereinstimmen. Entscheidend ist jedoch, dass wie bei einem Fingerabdruck im formteilspezifischen Ereignismuster und im Mess-Ereignismuster charakteristische Ereignisse mit einer identischen Abfolge und auch passenden relativen Zeiten zueinander zu finden sind. Verschiedene Möglichkeiten der Zuordnung von virtuellen Ereignissen des formteilspezifischen Ereignismusters zu den passenden Mess-Ereignissen des Mess-Ereignismusters werden später noch erläutert.

Auf Basis der den virtuellen Ereignissen zugeordneten Positionsdaten und den Zeitinformationen und/oder Aktorpositionen, welche den diesen virtuellen Ereignissen jeweils zugeordneten Messereignissen zugeordnet sind, lassen sich dann die gewünschten Prozessparameterwerte ableiten.

Bei dieser Variante wird also darauf abgezielt, ein charakteristisches Ereignismuster wie eine Art Fingerabdruck durch eine entsprechende Analyse der Mess-Druckkurve wiederzufinden und somit eine Zuordnung zu ermöglichen, wann die Schmelzefront bestimmte Ereignisstellen innerhalb der Spritzform passiert. Es hat sich herausgestellt, dass durch die Analyse der Druckkurven zur Ermittlung des charakteristischen Ereignismusters und die Zuordnung der Ereignismuster zueinander eine sehr sichere Zuordnung möglich ist, welche das Verfahren erheblich vereinfacht.

Dabei muss nicht zwingend die oben beschriebene Reihenfolge eingehalten werden, sondern prinzipiell könnten beispielsweise auch erst die Messdaten aufgezeichnet werden und anschließend könnte eine Simulation erfolgen. In den meisten Fällen erfolgt aber erst eine Berechnung des formteilspezifischen Ereignismusters, da ja dieses immer wieder zum Vergleich mit den Mess-Ereignismustern herangezogen werden kann.

Eine Prozessparameterwert-Ermittlungseinrichtung, welche für diese Variante des erfindungsgemäßen Verfahren eingesetzt werden kann, benötigt dementsprechend eine Druckkurvenermittlungseinheit, die ausgebildet ist, um eine virtuelle formteilspezifische Druckkurve eines Spritzgussprozesses unter Nutzung der geometrischen Daten zu ermitteln. Hierbei kann es sich beispielsweise auch um eine Simulationseinheit handeln, welche z. B. eine FEM-Simulation durchführt, um die Druckkurve numerisch zu ermitteln.

Des Weiteren wird eine (erste) Musterermittlungseinheit benötigt, die ausgebildet ist, um ein formteilspezifisches Ereignismuster auf Basis der virtuellen formteilspezifischen Druckkurve zu ermitteln. Dieses formteilspezifische Ereignismuster weist, wie oben erläutert, eine Mehrzahl von singulären virtuellen Ereignissen auf, denen jeweils wieder eine relative Zeitinformation und/oder eine virtuelle Aktorposition sowie ein Positionsdatum zugeordnet sind.

Außerdem wird eine weitere Schnittstelle zur Erfassung einer Mess-Druckkurve während eines realen Spritzgussprozesses an einer Spritzgießanlage unter Nutzung der Spritzform benötigt. Diese zweite Schnittstelle kann die Schnittstelle zur Erfassung der Messdaten, beispielsweise ein Messsensor sein, der die Druckkurve aufnimmt, aber auch eine Schnittstelle, die von anderen Messsensoren oder aus der weiteren Maschinensteuerung die benötigten Messwerte oder die fertige Kurve übernimmt.

Es wird weiterhin eine Musterermittlungseinheit benötigt, die ausgebildet ist, um ein Mess-Ereignismuster auf Basis der Mess-Druckkurve zu ermitteln, wobei das Mess-Ereignismuster eine Mehrzahl von singulären Mess-Ereignissen aufweist, denen zumindest eine Zeitinformation und/oder Aktorposition zugeordnet ist, wie dies oben erläutert wurde. Bei dieser Musterermittlungseinheit kann es sich um die erste Musterermittlungseinheit handeln, die auch das formteilspezifische Ereignismuster auf Basis der virtuellen formteilspezifischen Druckkurve ermittelt. Es kann aber auch eine separate (zweite) Musterermittlungseinheit vorhanden sein.

Außerdem wird eine Zuordnungseinheit benötigt, die ausgebildet ist, um virtuelle Ereignisse des formteilspezifischen Ereignismusters zu Mess-Ereignissen des Mess-Ereignismusters zuzuordnen.

Schließlich sollte die Auswertungseinheit so ausgebildet sein, dass sie die Prozessparameterwerte, insbesondere die Fließfrontpositionen und gegebenenfalls die Fließfrontgeschwindigkeiten auf Basis der den virtuellen Ereignissen zugeordneten Positionsdaten und den Zeitinformationen und/oder Aktorpositionen, die den diesen virtuellen Ereignissen jeweils zugeordneten Messereignissen zugeordnet sind, ableiten kann.

Soweit dies möglich ist, wird der Volumenstrom während des Spritzgussprozesses bei der Ermittlung der Mess-Druckkurve konstant gehalten. Ebenso wird vorzugsweise der Volumenstrom bei der Ermittlung der virtuellen formteilspezifischen Druckkurve als konstant angenommen. In diesem Fall ist automatisch sichergestellt, dass sich die relativen zeitlichen Abstände zwischen den Ereignissen des charakteristischen Musters bzw. "Fingerabdrucks" nicht verändern können. Insbesondere aber dann, wenn es aus Gründen des Einspritzprozesses sinnvoll ist, den Volumenstrom zu verändern, beispielsweise die Vorschubgeschwindigkeit des Aktors (z. B. der Schnecke) zu variieren, d. h. im Falle eines variablen Volumenstroms während des Spritzgussprozesses, wird eine dabei ermittelte Mess-Druckkurve zunächst in eine fiktive, zeitkorrigierte Mess-Druckkurve umgerechnet. Dies erfolgt unter Nutzung von Daten über die Volumenstromvariation bzw. die Steuerdaten der Spritzgießanlage während des Spritzgussprozesses. Diese zeitkorrigierte Mess-Druckkurve entspricht dann einer Mess-Druckkurve, wie sie gemessen worden wäre, wenn während des ganzen Zeitraums der Volumenstrom konstant gehalten worden wäre. Insofern kann diese fiktive, zeitkorrigierte Mess-Druckkurve auch als variationsbereinigte Mess-Druckkurve bezeichnet werden. Auf Basis dieser zeitkorrigierten Mess-Druckkurve wird das Mess-Ereignismuster ermittelt. Dies ermöglicht dann den Vergleich bzw. die Zuordnung zu den Ereignissen im virtuellen formteilspezifischen Ereignismuster, welches ja unter Annahme eines kontanten Volumenstroms ermittelt wurde. Es wird an dieser Stelle darauf hingewiesen, dass es aber prinzipiell auch möglich ist, ebenso bei der Simulation einen variablen Volumenstrom anzunehmen, d. h. prinzipiell könnte bei einem genau bekannten variablen Volumenstrom während der Messung auch entsprechend der Volumenstrom während einer Simulation variiert werden. Auch in diesem Fall ist wieder ein Vergleich der Ereignismuster möglich. Lediglich der Vollständigkeit halber wird darauf hingewiesen, dass auch eine mit einem angenommenen variablen Volumenstrom ermittelte virtuelle formteilspezifische Druckkurve entsprechend der Mess-Druckkurve korrigiert werden kann bzw. in eine virtuelle Druckkurve mit konstantem Volumenstrom umgerechnet werden kann.

Wie bereits eingangs erwähnt, machen sich die Ereignisstellen, die ja in der Regel aus einer Geometrieänderung der Kavität resultieren, durch überproportionale Änderungen des Druckgradienten bemerkbar. Daher werden vorzugsweise die virtuellen Ereignisse des charakteristischen Ereignismusters auf Basis der zeitlichen Änderung der Steigung der virtuellen formteilspezifischen Druckkurve bestimmt. Ebenso werden vorzugsweise die Messereignisse des Mess-Ereignismusters auf Basis der zeitlichen Änderung der Steigung der Mess-Druckkurve bestimmt.

Bei einem besonders bevorzugten Verfahren wird die formteilspezifische Druckkurve zeitlich differenziert (1. Ableitung) und die virtuellen Ereignisse werden dann mit Hilfe einer Flankenanalyse der zeitlich differenzierten formteilspezifischen Druckkurve ermittelt. In entsprechender Weise kann auch die Mess-Druckkurve zeitlich differenziert werden und die Messereignisse werden mit Hilfe einer Flankenanalyse der zeitlich differenzierten Mess-Druckkurve ermittelt. Im Rahmen dieser Flankenanalyse werden jeweils die Steigungen innerhalb der differenzierten Druckkurve analysiert.

Beispielsweise kann immer dann, wenn ein besonders starker Anstieg in der differenzierten Druckkurve auftrifft, geprüft werden, wo die Tangente der Anstiegsflanke sich mit der Tangente des vorherigen Abschnitts vor der Flanke schneidet. Dieser zeitliche Punkt kann als Zeitpunkt des jeweiligen Ereignisses definiert werden. Zur Durchführung der Differenzierung der Druckkurven sowie für die Flankenanalyse kann auf bereits bekannte Software zurückgegriffen werden, wie beispielsweise OriginPro oder Matlab. Weiter bevorzugt können alternativ oder zusätzlich zur Flankenanalyse die virtuellen Ereignisse auch mit Hilfe einer Peakanalyse der zeitlich differenzierten formteilspezifischen Druckkurve ermittelt werden, wobei auch die Peakhöhe berücksichtigt werden kann. Ebenso wäre auch eine Analyse der Wendepunkte möglich, um die die virtuellen Ereignisse zu finden.

Vorzugsweise wird zur Ermittlung des Mess-Ereignismusters eine Mehrzahl von Messereignissen zwischen dem Zeitpunkt des Eintritts der Schmelze in eine Formteilanschnittstelle (im Englischen "Gate" genannt) der Kavität der Spritzform und einem Ende der Formfüllungsphase der Spritzform ermittelt. Unter "Formfüllungsphase" ist hier der Zeitraum vom Beginn der Füllung der Spritzform, d. h. in dem Moment, wo die Schmelzefront die Formteilanschnittstelle erreicht, bis zum Beginn der sogenannten "volumetrischen Füllphase" zu verstehen, d. h. bis die Schmelzefront das Fließwegende der Kavität erreicht hat und in der Regel auf eine druckgeregelte Nachdruckphase umgeschaltet wird. Durch eine Mehrzahl von Messereignissen im Ereignismuster, die in diesen zeitlichen Bereich fallen, ist eine besonders gute Zuordnung der charakteristischen Ereignismuster möglich. Besonders bevorzugt wird sogar nur der zeitliche Bereich der Mess-Druckkurve herangezogen, der während dieser Formfüllungsphase der Spritzform ermittelt wird. Entsprechend reicht es dann aus, auch nur diesen Teil der formteilspezifischen virtuellen Druckkurve zu berechnen bzw. zu simulieren. Prinzipiell ist es natürlich auch möglich, einen größeren zeitlichen Bereich zu verwenden, insbesondere zu einem früheren Zeitpunkt zu beginnen und beispielsweise den Startpunkt auf den Eintritt der Schmelzefront in den Angusskanal abzustellen oder dergleichen.

Wie bereits eingangs erwähnt, ist es prinzipiell möglich, für die Ermittlung der Mess-Druckkurve auch Messwerte von Sensoren innerhalb einer Spritzform heranzuziehen. Vorzugsweise erfolgt aber die Ermittlung der Mess-Druckkurve während des Spritzgussprozesses mittels einer Auswertung von Mess- und Einstellwerten von außerhalb der Spritzform, d. h. mit den Mitteln, die an einer herkömmlichen Spritzgießanlage ohnehin vorhanden sind. Bei einer bevorzugten Variante erfolgt dabei die Messung der Mess-Druckkurve sogar ausschließlich durch die Mess- und Einstellwerte von außerhalb der Spritzform, d. h. es werden keine Messwerte verwendet, die von Sensoren gemessen werden, die in der Kavität der Spritzform angeordnet sind.

Die virtuelle formteilspezifische Druckkurve wird insbesondere bei komplizierteren Formteilen bevorzugt unter Nutzung einer numerischen Simulation ermittelt. Hierzu kann handelsübliche FEM-Simulationssoftware verwendet werden, beispielsweise Autodesk Moldflow, Cadmold oder Moldex3D.

Die Zuordnung von virtuellen Ereignissen des formteilspezifischen Ereignismusters zu Messereignissen des Mess-Ereignismusters kann bei einer bevorzugten Variante mit Hilfe eines beliebigen Mustererkennungsverfahrens, insbesondere Bilderkennungsverfahrens durchgeführt werden. Unter Bilderkennungsverfahren sind insbesondere auch Bildregistrierungsverfahren oder sonstige Matching-Verfahren zu verstehen, die dazu dienen, beispielsweise Bilder und/oder biometrische Daten wie Fingerabdrücke etc. zu analysieren und wiederum anderen entsprechenden Bildern oder biometrischen Daten zuzuordnen. Dabei kann also auch auf herkömmliche Software zurückgegriffen werden, die beispielsweise als Basis auch für andere Mustererkennungaufgaben, insbesondere Bilderkennungsaufgaben, Bildregistrierungsaufgaben oder sonstige Matching-Aufgaben von Fingerabdrücken oder anderen Mustern herangezogen werden kann.

Bei einem bevorzugten Verfahren wird versucht, zur Zuordnung von virtuellen Ereignissen des formteilspezifischen Ereignismusters zu Messereignissen des Mess-Ereignismusters in einem iterativen Verfahren das formteilspezifische Ereignismuster und das Mess-Ereignismuster zumindest teilweise (virtuell) in Überdeckung zu bringen. Dabei können zwischen den verschiedenen Iterationsschritten das formteilspezifische Ereignismuster und/oder das Mess-Ereignismuster nach definierten Regeln zeitlich skaliert und/oder relativ zueinander verschoben werden, um eine Anpassung zu erreichen. Zusätzlich oder alternativ können auch virtuelle Ereignisse des formteilspezifischen Ereignismusters und/oder Messereignisse des Mess-Ereignismusters zwischen verschiedenen Iterationsschritten nach den bestimmten Regeln eliminiert werden, um so einzelne Ereignisse für dieses Überdeckungs- bzw. Matching-Verfahren herauszunehmen, die nicht in das jeweils andere Muster hineinpassen. Ein typisches Beispiel hierfür ist, wenn das virtuelle formteilspezifische Ereignismuster so ermittelt wurde, dass der Startzeitpunkt zum Durchtritt der Schmelzefront durch die Formteilanschnittstelle gewählt ist, aber die Mess-Druckkurve den Eintritt der Schmelzefront in den Angusskanal mit als Ereignis enthält. In diesem Fall würde das Mess-Ereignismuster mehrere singuläre Ereignisse aufweisen, bevor ein Mess-Ereignismuster-Abschnitt auftritt, welcher dem formteilspezifischen virtuellen Ereignismuster entspricht.

Es sei an dieser Stelle darauf hingewiesen, dass es prinzipiell auch möglich ist, mehrere virtuelle formteilspezifische Ereignismuster, beispielsweise für verschiedene Fließwege und/oder mehrere Kavitäten in einer komplexen Form, einem Mess-Ereignismuster zuzuordnen.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:

Figur 1 eine schematische Darstellung eines Ausführungsbeispiels des erfindungsgemäßen Verfahrens zur Ermittlung von Prozessparameterwerten;

Figur 2 eine schematische Darstellung eines 1-dimensionalen Fließwegs für eine Stufenplatte und einer zugehörigen schematisierten Druckanstiegskurve;

Figur 3 einen numerisch berechneten Druckverlauf für die Stufenplatte aus Figur 2 mit einem Angusssystem;

Figur 4 eine schematische Kurve des über der Zeit differenzierten Druckverlaufs aus Figur 3;

Figur 5 eine schematische Darstellung eines Ausführungsbeispiels einer erfindungsgemäßen Spritzgießanlage;

Figur 6 eine perspektivische Darstellung eines ersten Formteils in Form einer Stufenplatte mit einem Angusssystem;

Figur 7 eine simulierte (virtuelle) Druckkurve für das Formteil gemäß Figur 6;

Figur 8 den in Figur 7 markierten Ausschnitt der simulierten Druckkurve (oben) und die simulierte Druckkurve differenziert nach der Zeit (unten);

Figur 9 eine reale Mess-Druckkurve für das Formteil gemäß Figur 6;

Figur 10 den in Figur 9 markierten Ausschnitt der (geglätteten) Mess-Druckkurve (oben) und die Mess-Druckkurve differenziert nach der Zeit (unten);

Figur 11 ein virtuelles Ereignismuster (obere Reihe) aus der Analyse der simulierten (virtuellen) Druckkurve nach Figur 8 und ein Mess-Ereignismuster (untere Reihe) aus der Analyse der Mess-Druckkurve nach Figur 10 ;

Figur 12a mit 12b ein Beispiel für ein Flussdiagramm zur Zuordnung von Ereignissen eines virtuellen Ereignismusters zu Ereignissen eines Mess-Ereignismusters;

Figur 13 das virtuelle Ereignismuster (obere Reihe) und das Mess-Ereignismuster (untere Reihe) aus Figur 11 nach der Zuordnung;

Figur 14 eine schematische Darstellung einer Benutzerschnittstelle mit einer Visualisierung einer Fließfront in dem Formteil gemäß Figur 6 und darunter eine Darstellung der bei Einspritzprozess verwendeten Einspritzgeschwindigkeitsfunktion;

Figur 15 eine perspektivische Darstellung eines ersten Formteils in Form eines Stapelbausteins;

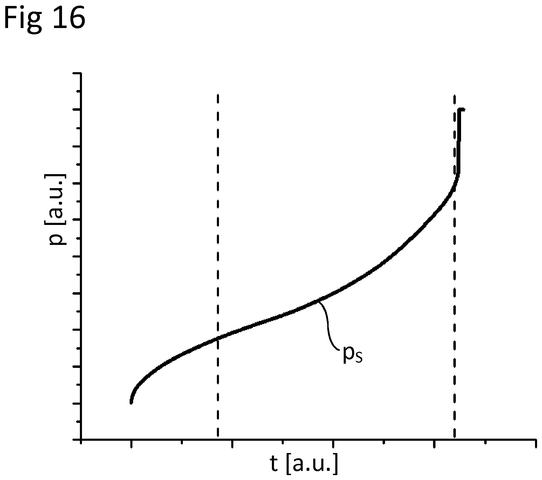

Figur 16 eine simulierte (virtuelle) Druckkurve für das Formteil gemäß Figur 15;

Figur 17 den in Figur 16 markierten Ausschnitt der simulierten Druckkurve (oben) und die simulierte Druckkurve differenziert nach der Zeit (unten);

Figur 18 eine reale Mess-Druckkurve für das Formteil gemäß Figur 15;

Figur 19 den in Figur 18 markierten Ausschnitt der (geglätteten) Mess-Druckkurve (oben) und die Mess-Druckkurve differenziert nach der Zeit (unten);

Figur 20 ein virtuelles Ereignismuster (mittlere Reihe) aus der Analyse der virtuellen Druckkurve nach Figur 17 und ein Mess-Ereignismuster (untere Reihe) aus der Analyse der Mess-Druckkurve nach Figur 19 sowie das virtuelle Ereignismuster (obere Reihe) nach einer Anpassung an das Mess-Ereignismuster;

Figur 21 eine schematische Darstellung der Visualisierung einer Fließfront in dem Formteil gemäß Figur 15 an einer ersten Ereignisstelle;

Figur 22 eine schematische Darstellung der Visualisierung einer Fließfront in dem Formteil gemäß Figur 15 an einer zweiten Ereignisstelle;

Figur 23 eine schematische Darstellung der Benutzerschnittstelle gemäß Figur 14 mit einer Visualisierung der Fließfrontgeschwindigkeit in dem Formteil gemäß Figur 6 und darunter einer Darstellung der bei Einspritzprozess verwendeten Einspritzgeschwindigkeitsfunktion;

Figur 24 eine schematische Darstellung der Benutzerschnittstelle mit einer Visualisierung der Fließfrontgeschwindigkeit in dem Formteil wie in Figur 23 jedoch nun nach einem geänderten Vorschlag für die Einspritzgeschwindigkeitsfunktion;

Figur 25 eine schematische Darstellung eines Ausführungsbeispiels einer Spritzgießanlage mit einer Spritzform ähnlich wie in Figur 5 jedoch zusätzlich mit in der Kavität angeordneten weiteren Messpunkten und einer Röntgeneinrichtung.

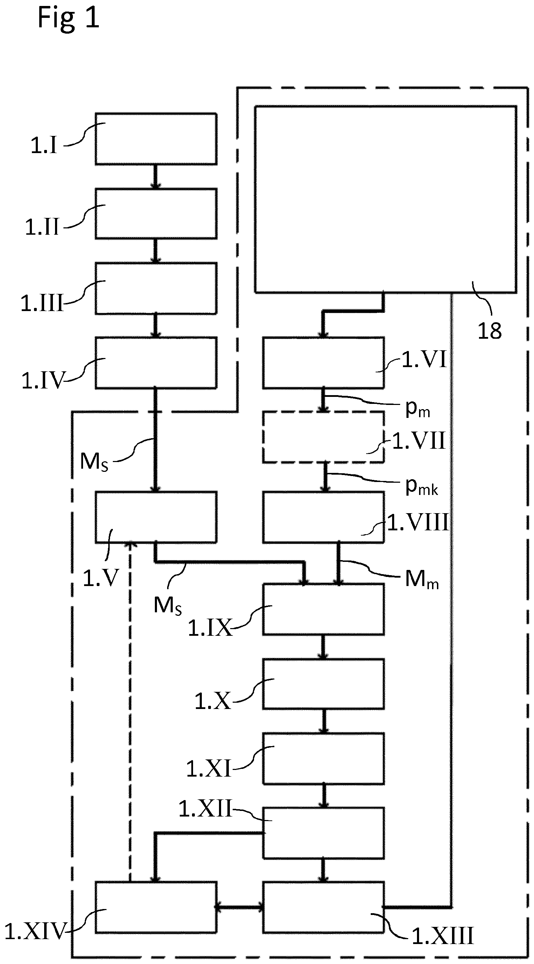

Figur 1 zeigt ein Flussdiagramm für eine bevorzugte Variante des Verfahrens zur Ermittlung der Prozessparameterwerte. Im Schritt 1.I werden zunächst die Geometriedaten des Formteils oder der Spritzform vollständig erfasst. Beispielsweise können sie bereits in maschinenlesbarer Form, z. B. als Step-Datei, vorliegen, die dann übernommen werden kann. In gleicher Weise können im Schritt 1.II zusätzlich zur Formteilgeometrie auch die Geometriedaten des Angusssystems miterfasst werden. Dies muss nicht zwingend in zwei verschiedenen Schritten geschehen, sondern ist prinzipiell auch in einem Schritt möglich.

Im Schritt 1.III wird dann auf Basis dieser Geometriedaten die virtuelle formteilspezifische Druckkurve (der virtuellen Schmelze bzw. Spritzgussmasse, daher auch "Massedruckkurve" genannt), d. h. der zum Füllen der Kavität benötigte bzw. am Anschnitt oder am Anguss rechnerisch ermittelte Druck über der (virtuellen) Einspritzzeit mit konstantem Volumenstrom des Spritzgussmaterials gerechnet. Im Folgenden wird davon ausgegangen, dass das Spritzgussmaterial eine Kunststoffschmelze ist. Diese Berechnung erfolgt vorzugsweise numerisch mit einer FEM (Finite-Elemente-Methode). Mit geeigneter bekannter Software, wie beispielsweise Autodesk Moldflow, können hierzu die Formteilgeometrie und ggf. die Geometriedaten des Angusssystems vernetzt und der Druckverlauf während der Formfüllung berechnet werden. Dabei bilden einzelne Elemente ein FEM-Netz mit Knotenpunkten an den Verknüpfungen.

Der zum Füllen der Kavität benötigte Druck kann z. B. wie folgt berechnet werden: Gemäß Gleichung von Hagen-Poiseuille

$$\Delta p = \frac{12 \cdot \dot{V} \cdot \eta}{b \cdot h^3} \cdot L \qquad\qquad (1)$$

ist der Druckverlust $\Delta p$ zum Füllen eines Fließwegabschnittes mit rechteckigem Querschnitt eine Funktion der Querschnittsfläche $b \cdot h$ des jeweiligen Schmelzekanals (b ist die Breite, h die Höhe) innerhalb der Kavität sowie des Volumenstroms $\dot{V}$, der Fließweglänge L und der Schmelzeviskosität $\eta$. Üblicherweise sind Kunststoffschmelzen strukturviskos, d. h. die Viskosität ist wiederum eine Funktion der Schergeschwindigkeit und somit des Volumenstroms und der Temperatur T. Die rechnerische Ermittlung des gesamten Druckverlusts, der bei vollständiger Füllung der Kavität entsteht, kann durch "Abschreiten" des Fließwegs der Kunststoffschmelze vom Anspritzpunkt bis zum Fließwegende (also während der sog. Einspritzphase) bei konstantem Volumenstrom erfolgen.

Auf dem Fließweg liegen Veränderungen der Formteilgeometrie bzw. des Fließwegquerschnitts vor. Solche Veränderungen können z. B. Verengungen, Aufweitungen, Kanten, Ecken, Rundungen oder Fließhindernisse sein. Trifft die Kunststoffschmelze auf eine solche Veränderung, liegt ein "Ereignis" vor, welches sich in der Druckkurve bemerkbar macht. Diese Stellen werden daher im Rahmen der Erfindung auch "Ereignisstellen" genannt.

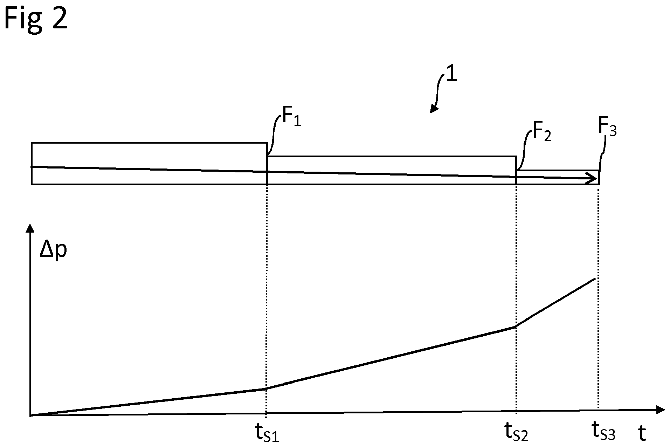

Das Prinzip lässt sich am besten anhand eines einfachen Beispiels erläutern. Hierzu wird auf Figur 2 verwiesen. In diesem Beispiel beschreibt der Fließweg von der Anspritzung bis zum Ende einen geradlinigen Pfad (eindimensionaler Fließweg) entlang einer Stufenplatte mit zwei Stufen als Formteil 1. In einem solchen Fall wäre die Bestimmung des Druckverlusts beispielsweise auch analytisch möglich. Dazu kann die Formteilgeometrie in berechenbare Grundgeometrieabschnitte zerlegt werden. Diese können dann einzeln gemäß Gleichung (1) berechnet werden.

In Figur 2 ist oben die Geometrie entlang des geradlinigen eindimensionalen Fließwegs dargestellt, wie sie sich vom großen Querschnitt zum kleinen Querschnitt hin verjüngt. Durch Aneinanderfügen der Druckverluste in den Einzelabschnitten generiert sich der Gesamtdruckverlustverlauf über den gesamten Fließweg und über die Füllzeit t. Auf dem Fließweg finden hier genau drei Ereignisse zu Zeiten $t_{S1}$, $t_{S2}$, $t_{S3}$ statt, nämlich genau dann, wenn die Schmelzefront an die Ereignisstellen $F_1$, $F_2$, $F_3$, nämlich die beiden Stufen und das Ende der Form, trifft. Wie in Figur 2 unten zu sehen ist, ändert sich an jeder Ereignisstelle $F_1$, $F_2$ mit einer Verengung die Steigung des Druckgradienten $\Delta p$.

Da die Schmelze weitestgehend inkompressibel ist, müssen zur Erfüllung der Kontinuitätsgleichung bei Änderung des Volumenstroms an der Maschine die Ereignisse im umgekehrten Verhältnis zur Höhe der Änderung stattfinden. Wird der Volumenstrom beispielsweise gemäß

$$\dot{V}' = f \cdot \dot{V} \qquad\qquad (2)$$

geändert (wobei f ein beliebiger Faktor ist), so würde bei einem Füllvorgang mit n solchen Ereignissen das i-te Ereignis $E_i$ also an der Position $L_j(x_i, y_i, y_i)$ zum Zeitpunkt

$$t_i' = \frac{1}{f} \cdot t_i \qquad\qquad (3)$$

stattfinden. Dabei wurde hier davon ausgegangen, dass die Position bzw. Stelle nicht nur eindimensional, sondern in drei Dimensionen definiert ist, was normalerweise bei einem nicht eindimensionalen Fließweg der Fall ist.

Eine solche rein analytische Berechnung über Abschnitte entlang des Fließwegs lässt sich prinzipiell auch an etwas komplizierteren Bauteilen durchführen, beispielsweise, wenn noch weitere Stufen oder andere Verengungen oder Erweiterungen eingebaut sind. Bei komplizierteren Formen, insbesondere mehrdimensionalen Formteilen, wird stattdessen besser eine numerische Berechnung mit Hilfe eines FEM-Programms durchgeführt. Wird beispielsweise ein Formteil in der Mitte angespritzt und füllt sich dann über verschiedene Fließwege, kann die Berechnung des Druckverlusts entlang jedes dieser Fließwege mit Hilfe eines solchen FEM-Programms erfolgen. Dabei wird ausgehend z. B. vom Anspritzpunkt ein zwei- oder dreidimensionales Füllbild erzeugt, das den simulierten Fließfrontverlauf über die Zeit darstellt. Die Diskreditierungsdichte kann über die Elementegröße des FEM-Netzes vorgegeben werden. An jedem einzelnen Knotenpunkt können dann durch das Programm der Druck, die Druckgradienten, die Temperaturen etc. über der Zeit berechnet werden.

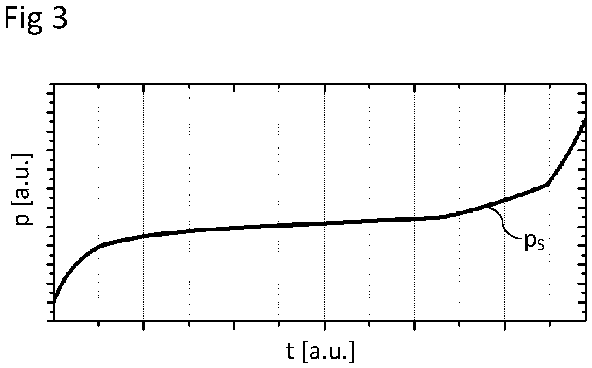

Figur 3 zeigt als Beispiel eine numerisch mit einem solchen Programm berechnete Druckkurve $p_S$. Aufgetragen ist hier der Druck p über der Zeit t in willkürlichen Einheiten ([a.u.]). Eine derartige Druckkurve kann auch während eines Einspritzprozesses direkt an der Einspritzanlage als reale Druckkurve bzw. Massedruckkurve der realen Schmelze bzw. Spritzgussmasse gemessen werden.

Im Rahmen des erfindungsgemäßen Verfahrens wird aus einer solchen berechneten Druckkurve $p_S$ für das jeweilige Formteil dann im Schritt 1.IV (siehe Figur 1) ein formteilspezifisches Ereignismuster $M_S$ ermittelt. Die Ereignisse können dabei aufgefunden werden, indem zunächst die Druckkurve $p_S$ nach der Zeit differenziert wird. Die Genauigkeit hängt dabei von der Diskreditierungsdichte der numerischen Berechnungen (z. B. Elementgröße) und der Auflösung der Differentation ab..

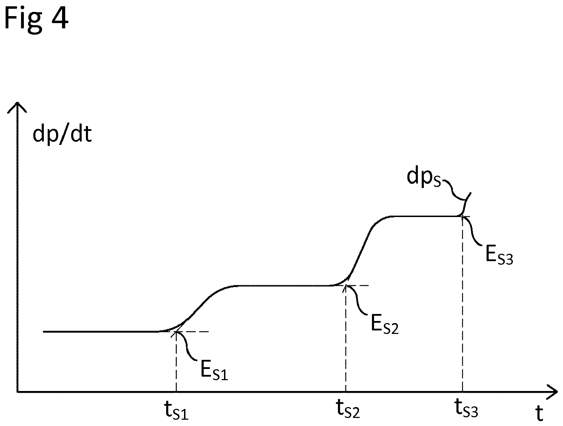

In Figur 4 ist hierzu die differenzierte Druckkurve dps der Druckkurve $p_S$ aus Figur 3 dargestellt (wieder in willkürlichen Einheiten). Wie aus Figur 4 sehr gut zu sehen ist, lässt sich der Zeitpunkt eines oder mehrerer der berechneten Ereignisse $E_{S1}$, $E_{S2}$, $E_{S3}$, welche hier zu den Ereignisstellen $F_1$, $F_2$, $F_3$ des eindimensionalen Fließwegs passen, durch eine Flankenanalyse des Kurvenverlaufs der differenzierten Druckverlaufskurve $dp_S$ ermitteln. Beispielsweise werden hierzu einfach die Tangenten der ansteigenden Flanken ermittelt, und die Schnittpunkte der Tangenten der Flanken mit den Tangenten der davorliegenden, weniger stark ansteigenden Abschnitte bestimmen jeweils die Zeitpunkte $t_{S1}$, $t_{S2}$, $t_{S3}$ der drei Ereignisse $E_{S1}$, $E_{S2}$, $E_{S3}$. Wie hier zu sehen ist, entsprechen diese zeitlichen Abstände der Ereignisse bei einem eindimensionalen Fließweg den relativen räumlichen Abständen der Ereignisstellen.

Durch Überlagerung mit der Formteilgeometrie kann somit jedem einzelnen Ereignis $E_{S1}$, $E_{S2}$, $E_{S3}$ die berechnete Position der Schmelzefront zugeordnet werden. In einem Finite-Elemente-Netz können Ereignisse einem oder mehreren Knotenpunkten zugeordnet werden, die auf der Schmelzefront oder ihr am nächsten liegen. Dabei kann jedes Ereignis $E_{Si}$ als Vektor $E_{Si} (t_{Si}, p_{Si}, x_{Si}, y_{Si}, z_{Si}, h_{Si})$ dargestellt werden, der neben dem Ereigniszeitpunkt $t_{Si}$ weitere Komponenten beinhaltet, wie insbesondere die Position der Schmelzefront in allen drei Raumrichtungen, den berechneten Druckverlust an dieser Stelle und ggf. auch die Geometriedaten des Schmelzekanals an der berechneten Stelle, beispielsweise die Höhe $h_{s,i}$ des Kanals.

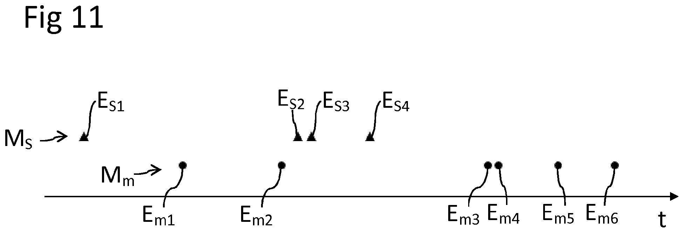

Trägt man einfach nur die Zeitpunkte der einzelnen Ereignisse über der Zeit auf, beispielsweise in Form von Punkten, wie dies später u.a. noch anhand von Figur 11 gezeigt wird, ergibt sich ein formteilspezifisches Ereignismuster, d. h. ein individuelles und eindeutiges Muster wie ein Fingerabdruck für das jeweilige Formteil. Dieses Muster beschreibt eine relative zeitliche (und auch räumliche) Anordnung aller berechneten Ereignisse beim Voranschreiten der Kunststoffschmelze von der Anspritzung bis zum Fließwegende und lässt sich abhängig vom jeweiligen Volumenstrom, der bei der Berechnung angenommen wurde, stauchen oder strecken. Das formteilspezifische Ereignismuster $M_S$ kann dann zusammen mit den Geometriedaten in einem Parametersatz bzw. Kenndatensatz in Form einer maschinenlesbaren Datei zusammengefasst werden (siehe Schritt 1.V in Figur 1) und in die Steuereinrichtung (im Folgenden auch Maschinensteuerung genannt) der Spritzgießanlage eingelesen werden. Liegt eine FEM-Berechnung vor, kann der Parametersatz zusätzliche Daten wie das FEM-Netz und den berechneten Füllverlauf des Einspritzvorgangs beinhalten.

Moderne Spritzgießanlagen sind in der Lage, Einstellparameter wie Temperaturen, Drücke und Geschwindigkeiten in engen Grenzen zu regeln. Die Maschinensteuerung vergleicht dabei die eingestellten Parameter mit den gemessenen Daten und wirkt anschließend auf die in der Anlage verbauten bzw. externen Stellglieder. Häufig wird dabei auf einen konstanten Druck oder auf einen konstanten Volumenstrom geregelt oder es wird z. B. einer vorgegebenen Volumenstrom-Funktion gefolgt. Bei dieser Regelung wird also der Volumenstrom als Soll-Größe verwendet.

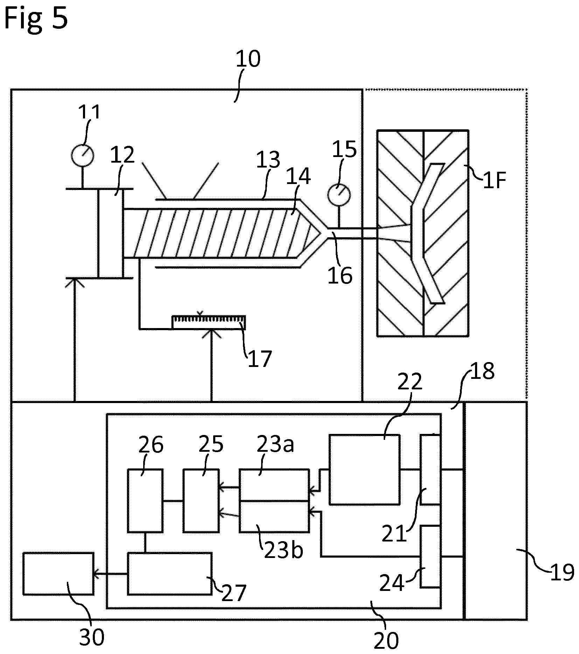

In Figur 1 ist die Steuereinrichtung 18 nur als ein einfacher Block dargestellt, aus dem Daten übernommen bzw. an den Daten übergeben werden. Figur 5 zeigt ein vereinfachtes schematisches Bild einer steuer- bzw. regelbaren Spritzgießanlage 10. Dabei kann es sich, abgesehen von der veränderten Steuereinrichtung 18, um eine herkömmliche Spritzgießanlage 10 handeln.

Diese weist hier in üblicher Weise einen Zylinder 13 auf, in welchem eine Schnecke 14 als Aktor 14 angeordnet ist. In den Zylinder 13 kann Spritzgussmaterial durch Schraubbewegungen der Schnecke 14 zugeführt werden. An ihrem unteren Ende ist die Schnecke 14 mit einem Einspritzkolben 12 verbunden, der hydraulisch bewegt werden kann. Ebenso könnte aber auch ein Elektromotor zum Einspritzen genutzt werden. An einer Messeinrichtung 11 kann der Hydraulikdruck gemessen werden. Wenn der Hydraulikdruck erhöht wird, wird der Einspritzkolben 12 nach vorne ausgefahren und somit die Schnecke 14 im Zylinder 13 nach vorne gepresst und Spritzgussmaterial aus der Düse 16 in die Kavität der hier sehr grob dargestellten Spritzform 1F eingepresst. Dabei kann auch an der Düse mittels eines Messsensors 15 der Druck der Kunststoffschmelze unmittelbar gemessen werden. Über eine weitere Messeinrichtung 17 kann jederzeit die Position des Aktors 14 bzw. der Schnecke 14 und deren Geschwindigkeit bestimmt werden.

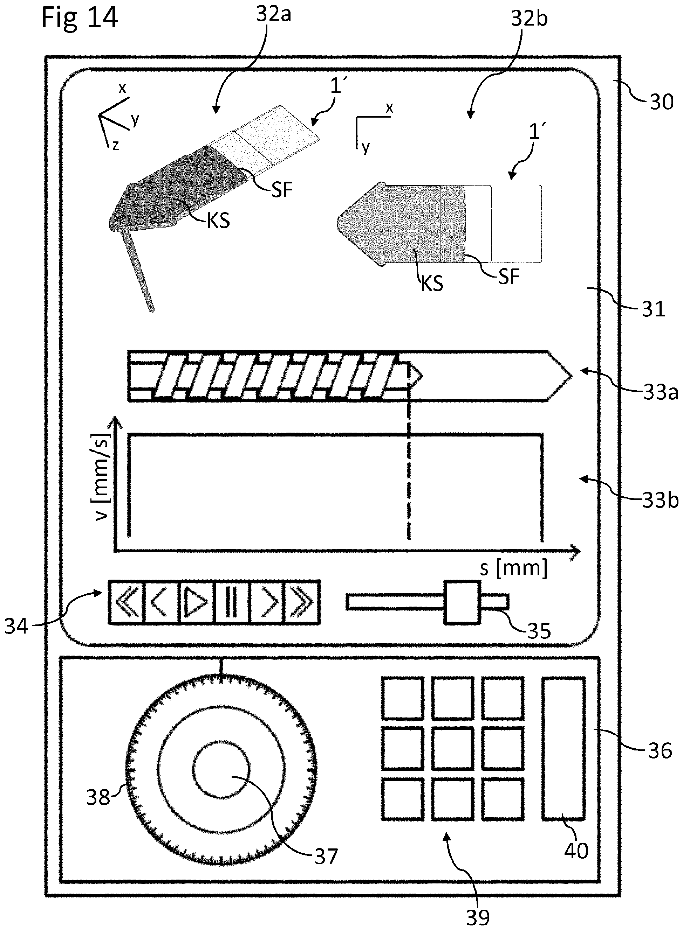

Angesteuert werden die verschiedenen Komponenten bzw. Aktoren durch eine Steuereinrichtung 18, welche ein Terminal bzw. eine Benutzerschnittstelle 30 mit einer Anzeigeeinrichtung 31 bzw. Bildschirm (siehe Figur 14), vorzugsweise in Form eines Touch-Displays, und gegebenenfalls einem Bedienpanel 36 (mit weiteren Armaturen wie einem Drehsteller 38 (bzw. Einstellrad) und einer Tastatur 39) aufweist und neben anderen üblichen Komponenten, die in einer solchen Maschinensteuerung vorhanden sind, auch eine erfindungsgemäße Prozessparameter-Ermittlungseinrichtung 20 umfasst, deren wesentlichsten Teile hier grob schematisch eingezeichnet sind. Die weiteren Komponenten der Steuereinrichtung 18 sowie der Spritzgießanlage sind dem Fachmann im Prinzip bekannt und brauchen daher hier nicht im Detail erläutert zu werden.

Die Prozessparameter-Ermittlungseinrichtung 20 umfasst hier zum einen eine erste Schnittstelle 21, über die beispielsweise die Geometriedaten des Formteils übernommen werden können. Diese Daten werden dann an eine Druckkurven-Ermittlungseinheit 22 weitergeleitet, welche den zuvor anhand der Figur 1 erläuterten Verfahrensschritt 1.III durchführt und beispielsweise in einer FEM-Simulation eine Druckkurve $p_S$ für das jeweilige Formteil berechnet. Die Druckkurve $p_S$ kann dann an eine Ereignismuster-Ermittlungseinheit 23a übergeben werden, welche gemäß dem im Zusammenhang mit Figur 1 erläuterten Schritt 1.IV das formteilspezifische Ereignismuster $M_S$ aus der virtuellen Druckkurve $p_S$ ermittelt.

Über eine weitere Schnittstelle 24 kann außerdem eine Mess-Druckkurve $p_M$ übernommen werden, beispielsweise durch Auslesen des Sensors 11 zur Messung des Hydraulikdrucks, oder direkt durch Auslesen des Sensors 15 im Schmelzekanal, d. h. direkt des Schmelzedrucks. Diese Mess-Druckkurve $p_m$ kann an die Muster-Ermittlungseinheit 23b übergeben werden, welche in analoger Weise ein Mess-Ereignismuster $M_m$ aus der Mess-Druckkurve $p_m$ ermittelt, beispielsweise ebenfalls durch Differenzierung und Flankenanalyse, wie dies oben für die simulierte Druckkurve $p_S$ beschrieben wurde. Die beiden Muster-Ermittlungseinheiten 23a, 23b können dabei auch als eine gemeinsame Muster-Ermittlungseinheit ausgebildet sein, welche einfach nur mit den jeweiligen Eingangsdaten $p_S$, $p_m$ gefüttert wird und entsprechende Ereignismuster $M_S$, $M_m$ liefert.

Die Schnittstellen 21, 24 können die Daten jeweils beispielsweise auch über ein übliches Interface 19 der Steuereinrichtung 18 erhalten, über das ein externer Datenaustausch zu anderen Rechnereinheiten, Speichern etc. möglich ist, welches aber auch die Daten von Sensoren 11, 15 der Spritzgießanlage selbst übernehmen kann.

Die Messung der Mess-Druckkurve $p_m$ mit Hilfe der Steuereinrichtung 18 ist in Figur 1 als Block 1.VI dargestellt. Die dabei erhaltene Mess-Druckkurve $p_m$ kann dann optional im Schritt 1.VII noch korrigiert werden, beispielsweise, wenn während der Messung der Volumenstrom nicht konstant gehalten, sondern gemäß einer bestimmten Steuerungsregel verändert wurde. Mit Hilfe der Daten über die Veränderung des Volumenstroms ist dann eine Umrechnung in eine zeitkorrigierte Mess-Druckkurve $p_{mk}$ möglich, welche einer Mess-Druckkurve bei konstantem Volumenstrom entsprechen würde. Um aus den einzelnen Werten des Drucks über der Zeit die Mess-Druckkurve $p_m$ (bzw. die zeitkorrigierte Mess-Druckkurve $p_{mk}$) zu erzeugen, könnte die Prozessparameter-Ermittlungseinrichtung auch eine (nicht dargestellte) separate weitere Druckkurven-Ermittlungseinheit aufweisen. Grundsätzlich könnten diese Druckkurven aber auch schon an anderer Stelle in der Steuereinrichtung berechnet werden und als komplette Druckkurven über die Schnittstelle 24 übergeben werden.

Im Schritt I.VIII wird dann auf Basis der Mess-Druckkurve bzw. optional der zeitkorrigierte Mess-Druckkurve $p_{mk}$ das Mess-Ereignismuster $M_m$ erzeugt. Dies erfolgt in der Muster-Ermittlungseinheit 23b.

Sowohl das formteilspezifische Ereignismuster $M_S$ als auch das Mess-Ereignismuster $M_m$ werden dann an eine Zuordnungseinheit 25 übergeben, welche beispielsweise den Schritt 1.IX (siehe Figur 1) durchführt. Hier wird versucht, die Ereignismuster $M_S$, $M_m$ oder zumindest Teile davon gegeneinander abzugleichen, um so die einzelnen Ereignisse der beiden Ereignismuster $M_S$, $M_m$ einander zuzuordnen. In der Regel wird versucht, die virtuellen Ereignisse des formteilspezifischen Ereignismusters $M_S$ jeweils den Mess-Ereignissen des Mess-Ereignismusters $M_m$ zuzuordnen, wie dies später noch erläutert wird.

Sind die Ereignisse einander zugeordnet, so kann dann in einem weiteren Schritt 1.X die Schmelzefrontposition den jeweiligen Ereignissen zugeordnet werden. Im Schritt 1.XI kann dann auf Basis der Zeitpunkte, zu denen diese Ereignisse eintraten, die Fließfrontgeschwindigkeit ermittelt werden, und schließlich können im Schritt 1.XII auch maschinenunabhängige Kenngrößen wie beispielsweise die Schergeschwindigkeit etc. berechnet werden. Dies wird später noch erläutert. All diese Schritte 1.X, 1.XI, 1.XII können beispielsweise in der Auswerteeinheit 26 durchgeführt werden. Die ermittelten Daten, insbesondere die Prozessparameterwerte in Abhängigkeit von der Einspritzzeit und/oder Aktorposition, können von der Auswerteeinheit 26 an eine Anzeigen-Ansteuerungseinrichtung 27 übergeben werden, die die Anzeigeeinrichtung 31 der Benutzerschnittstelle 30 entsprechend ansteuert, um die Prozessparameterwerte, insbesondere die Position der Fließfront SF und/oder Fließfrontgeschwindigkeiten, in der Spritzform 1F anzuzeigen.

Sinnvollerweise werden bei genau der Parametereinstellung der Spritzgießanlage, welche die beste Formteilqualität liefert, die maschinenunabhängigen Größen sowie vorzugsweise auch die anderen Größen, wie Fließfrontgeschwindigkeiten etc., als Referenzliste abgelegt. Dies ist im Schritt 1.XIV dargestellt. Beispielsweise können alle relevanten Größen als Komponenten auch in den bereits oben erwähnten Ereignisvektor zurückgeschrieben und dann in einem Kenndatensatz abgelegt werden. Bei einem Maschinenwechsel können dann diese Komponenten als Soll-Größen dienen. Durch Rückrechnung lassen sich die neuen Einstellungswerte der Maschinenparameter wie der Volumenstromverlauf und/oder der Druckverlauf etc. bestimmen und entsprechend die Maschine regeln. Bei einer solchen Regelung werden dann in einem Schritt 1.XIII die im letzten Spritzgussvorgang im Schritt 1.XII ermittelten Größen mit der Referenzliste der Kenngrößen, die im Schritt 1.XIV abgelegt wurden, verglichen und dann entsprechende Steuerbefehle an die Spritzgießanlage bzw. deren Steuerkomponenten, die für die Einstellung der Aktoren verantwortlich sind, übermittelt.

Die Fließfrontgeschwindigkeit $v_i$ der Schmelze kann dabei gemäß

$$v_i = \frac{x_{Si+1} - x_{Si}}{t_{mi+1} - t_{mi}} \qquad (4)$$

berechnet werden, wobei $x_{Si}$ und $x_{Si+1}$ die Positionsdaten des i-ten bzw. (i+1)-ten Ereignisses repräsentieren soll, wie sie von den virtuellen Ereignissen bekannt sind, und $t_{mi}$ bzw. $t_{mi+1}$ jeweils die Maschinenzeit ist, zu der die dem jeweiligen virtuellen Ereignis zugeordneten Mess-Ereignisse aufgetreten sind, d. h. die Position erreicht wurde.

Ebenso lässt sich zwischen zwei Ereignissen auch wie folgt die Massedruckerhöhung bestimmen:

$$\Delta p_i = p_{mi+1} - p_{mi} \qquad (5)$$

Dabei sind $p_{mi}$ und $p_{mi+1}$ die gemessenen Druckwerte zu den zum i-ten bzw. (i+1)-ten Ereignis gehörenden Zeiten $t_{mi}$ bzw. $t_{mi+1}$.

Aus diesen berechneten Komponenten, Fließfrontgeschwindigkeit und Massedruckerhöhung, können dann die maschinenunabhängigen rheologischen Größen wie die Wandschubspannung $\tau_i$, die Schergeschwindigkeit $\dot{\gamma}_i$ und die Schmelzeviskosität $\eta_i$ abgeleitet werden. Dies erfolgt beispielsweise bei rechteckigem Fließkanalquerschnitt gemäß den Gleichungen:

$$\tau_i = \frac{\Delta p_i \cdot h_{Si}}{2 \cdot \left(x_{Si+1} - x_{Si}\right)} \qquad (6)$$

$$\dot{\gamma}_i = 0{,}722 \cdot \frac{6 \cdot v_i}{h_{Si}} \qquad (7)$$

$$\eta_i = \frac{\Delta p_i \cdot h_{Si}^2}{12 \cdot \left(x_{Si+1} - x_{Si}\right) \cdot v_i} \qquad (8)$$

Dabei ist $h_{Si}$ die Fließkanalhöhe an der Position $x_{Si}$. Für andere Geometrien gelten ähnliche Gleichungen, die dem Fachmann bekannt sind.

In Kombination mit dem erfindungsgemäßen Verfahren kann die Spritzgießanlage also wie ein Rheometer verwendet werden, welches in Echtzeit rheologische Informationen an- und zwischen den Ereignisstellen der Formteilgeometrie liefert.

Um die Genauigkeit des beschriebenen Verfahrens zu erhöhen, können vorzugsweise die Positionsdaten und weitere Daten (beispielsweise Komponenten des Ereignisvektors) zwischen zwei Ereignissen $E_{m,i+j}$, $E_{m,i+j+1}$ analytisch oder numerisch approximiert werden. Liegt eine FEM Berechnung vor, kann dabei insbesondere jedem Knotenpunkt ein vollständiger Satz von Daten, insbesondere Komponenten des Ereignisvektors, zugewiesen werden.

Die Hinterlegung der Referenzliste kann auch dazu genutzt werden, um die Anlage zu regeln, wenn sich während des Spritzgießbetriebs durch Störgrößen wie z. B. äußere Temperatureinflüsse oder veränderte Materialviskosität Betriebsbedingungen ändern. Dann kann durch geeignete Regelmaßnahmen die Parametereinstellung der Maschine korrigiert werden, indem die genannten maschinenunabhängigen rheologischen Größen beispielsweise als Soll-Größen für die Korrektur verwendet werden.

Es wird an dieser Stelle darauf hingewiesen, dass sämtliche Schritte des Verfahrens nach Figur 1 in der Steuereinrichtung 18 selbst durchgeführt werden können, aber nicht zwingend müssen. Insbesondere bietet es sich an, die Simulation bzw. Berechnung des formteilspezifischen Ereignismusters $M_S$ gemäß den Schritten 1.I bis 1.IV auf einer besonders leistungsfähigen externen Rechnereinrichtung und beispielsweise alle anderen Schritte in der Steuereinrichtung 18 durchzuführen.

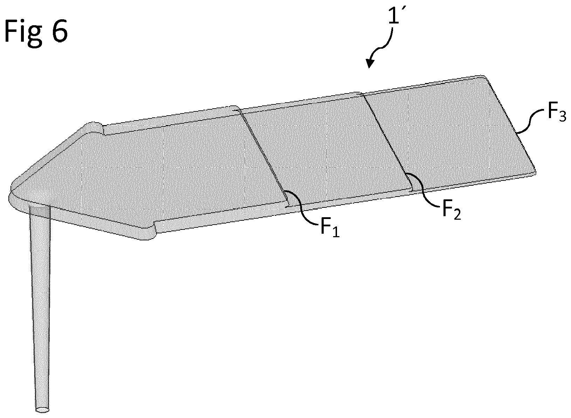

Im Folgenden wird das Auffinden eines formteilspezifischen Ereignismusters innerhalb eines Mess-Ereignismusters noch einmal am Beispiel eines Spritzgussvorgangs für ein Formteil 1' in Form einer Stufenplatte erläutert. Die Geometrie dieser Stufenplatte sowie die Geometrie des Angusssystems bzw. Angusskanals sind in einer perspektivischen Darstellung in Figur 6 dargestellt. Hier sind auch wieder die drei Ereignisstellen $F_1$, $F_2$, $F_3$, nämlich Stufen $F_1$, $F_2$ sowie das Ende $F_3$ des Formteils 1' dargestellt.

Es handelt sich hierbei um eine dreistufige Platte mit einem Querschnittsverhältnis an den Stufen von H1 (größte Höhe) = 2 x H2 = 4 x H3 (kleinste Höhe H3 = 1 mm). Die Grundfläche beträgt 120 x 60 mm. Die CAD-Geometrie wurde als Step-Datei (.stp) übernommen und das FEM-Netz wurde mit Autodesk Moldflow generiert. Dabei wurde eine Elementgröße von 1 mm in einem 3D-Volumenmodell mit acht Schichten über der Wandstärke verwendet. Das Angusssystem umfasst eine Angussstange, welche hier in Figur 6 nach unten weist, sowie einen Schwalbenschwanz am größten Querschnitt. Dieses Angusssystem wurde in der numerischen Analyse zur Berechnung der formteilspezifischen Druckkurve mit berechnet. In der Berechnung wurde von einer Werkzeugtemperatur von 30°C und einer Massetemperatur von 250°C ausgegangen, der Volumenstrom wurde bei 15 cm$^3$/Sek. konstant gehalten. Es wurde angenommen, dass es sich bei dem Material um ein ABS-Terluran GP-22 handelt. Bei 98 % Füllung wurde simuliert auf Nachdruck umgeschaltet.

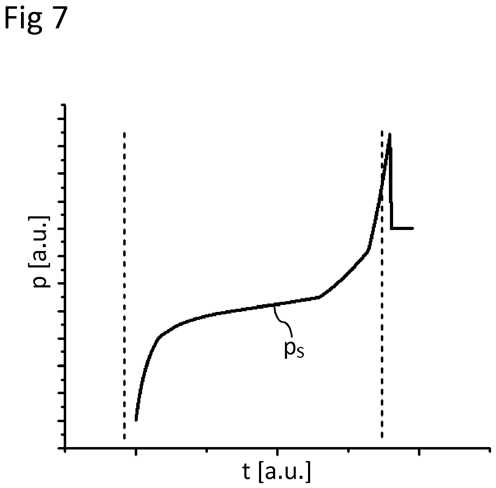

Abbildung 7 zeigt die hierbei ermittelte virtuelle bzw. simulierte Druckkurve $p_S$ (die Darstellung erfolgt wieder in willkürlichen Einheiten). Gestrichelt dargestellt ist ein Fenster, das markiert, welcher Teil der Druckkurve $p_S$ tatsächlich für die weitere Analyse verwendet wurde. Es ist nämlich sinnvoll, nur einen Teil der Druckkurve $p_S$ zu verwenden, vorzugsweise den Teil bis zum Ende der Formfüllungsphase, d. h. bis die Schmelzefront erstmals das Fliesswegende der Kavität der Spritzform erreicht.

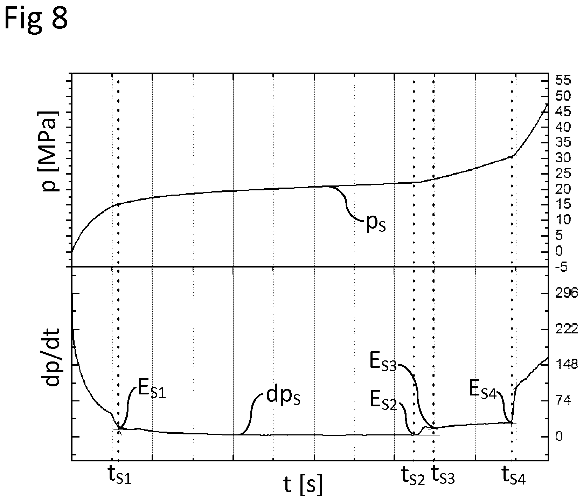

In Figur 8 ist noch einmal dieser Ausschnitt der Druckkurve $p_S$ in einer gemeinsamen Grafik mit der darunter angeordneten differenzierten Druckkurve dps dargestellt. Die Zeit ist hierbei in s angegeben und der Druck jeweils in MPa. In der unten dargestellten differenzierten Druckkurve ist auch bereits die Flankenanalyse symbolisiert, durch die insgesamt vier signifikante Ereignisse $E_{S1}$, $E_{S2}$, $E_{S3}$, $E_{S4}$ zu vier verschiedenen Zeitpunkten $t_{S1}$, $t_{S2}$, $t_{S3}$, $t_{S4}$ identifiziert wurden. Diese Zeiten $t_{S1}$, $t_{S2}$, $t_{S3}$, $t_{S4}$ sind wie erläutert auf den virtuellen Ablauf des Einspritzvorgangs bezogen. Sofern später eine tatsächliche Einspritzung in dieses Werkzeug erfolgt und die dabei gemessene Mess-Druckkurve in entsprechender Weise differenziert und mit einer Flankenanalyse analysiert wird, sollte ein passendes Muster darin zu finden sein, wobei dieses Muster dadurch charakterisiert ist, dass es wieder eine ähnliche oder im Wesentlichen gleiche Abfolge von Ereignissen mit ähnlichen oder im Wesentlichen gleichen relativen Abständen zueinander aufweist, sofern der Volumenstrom während der Messung konstant gehalten wurde. Dabei kann es durchaus sein, dass zusätzliche Ereignisse im Muster auftreten.

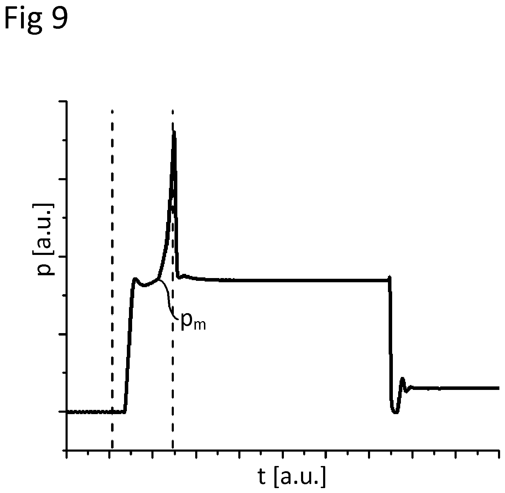

Um das erfindungsgemäße Verfahren zu testen, wird dann ein Spritzgießversuch durchgeführt, wobei ein Formteil, wie es in Figur 6 dargestellt ist, mit exakt demselben Angusssystem hergestellt wurde. Für diesen Spritzgießversuch wurde eine Spritzgießanlage Typ Battenfeld HM 800 mit 30 mm Schneckendurchmesser verwendet. Es wurde eine geschwindigkeitsgeregelte Einspritzung mit einem konstanten Volumenstrom von 15 cm$^3$/s durchgeführt, d. h. entsprechend der zuvor durchgeführten Simulation. Auch die Einstellparameter und das Material wurden wie bei der Simulation gewählt. Die Massedruckmessung, d. h. die Messung des Drucks im Spritzgussmaterial, erfolgte mittels eines im Schneckenvorraum, d. h. in der Maschinendüse, eingesetzten Massedruckaufnehmers. Die hierbei ermittelte Mess-Druckkurve $p_m$ ist in Figur 9 dargestellt (wieder zunächst in willkürlichen Einheiten). Auch hier ist ein Fenster eingezeichnet, das symbolisiert, welcher Bereich der Druckkurve $p_m$ für die Analyse dann verwendet wurde.

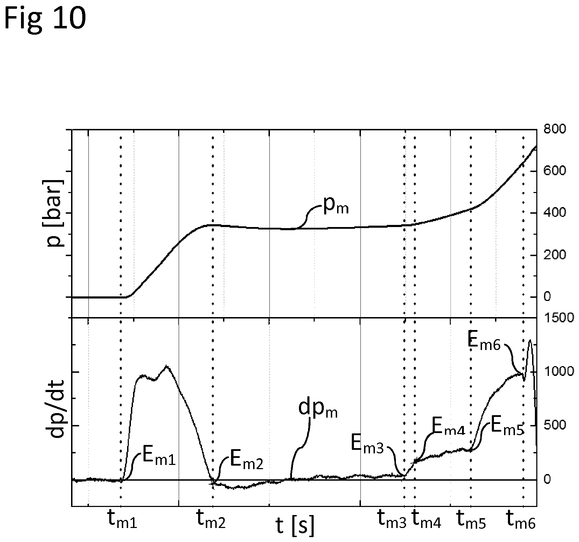

Figur 10 zeigt analog zu der Figur 8 für die simulierte Messung oben eine Grafik der Mess-Druckkurve $p_m$ und darunter die nach der Zeit t differenzierte Mess-Druckkurve $dp_m$. Der Maschinendruck ist hierbei in bar angegeben, ebenso bei der ersten Ableitung, und die Zeit in s. Es gibt hier insgesamt sechs Ereignisse $E_{m1}$, $E_{m2}$, $E_{m3}$, $E_{m4}$, $E_{m5}$, $E_{m6}$, welche zu den Zeitpunkten $t_{m1}$, $t_{m2}$, $t_{m3}$, $t_{m4}$, $t_{m5}$, $t_{m6}$ auftreten.

In Figur 11 sind noch einmal das formteilspezifische Ereignismuster $M_S$, welches anhand von Figur 8 ermittelt wurde, und das Mess-Ereignismuster $M_m$, welches anhand von Figur 10 ermittelt wurde, als Punktescharen in zwei Reihen übereinander dargestellt. Wie hier zu sehen ist, hat das formteilspezifische Ereignismuster $M_S$ vier Ereignisse $E_{S1}$, $E_{S2}$, $E_{S3}$, $E_{S4}$ und das Mess-Ereignismuster $M_m$ sechs Ereignisse $E_{m1}$, $E_{m2}$, $E_{m3}$, $E_{m4}$, $E_{m5}$, $E_{m6}$. Diese Punktescharen sind jeweils über der Zeitachse t aufgetragen. Die Ereignisse treten zu unterschiedlichen absoluten Zeiten auf, jedoch sollte sich das formteilspezifische Ereignismuster $M_S$ im Mess-Ereignismuster $M_m$ wiederfinden lassen, wenn das formteilspezifische Ereignismuster $M_S$ entsprechend zeitlich skaliert, d. h. verzerrt und verschoben, wird.

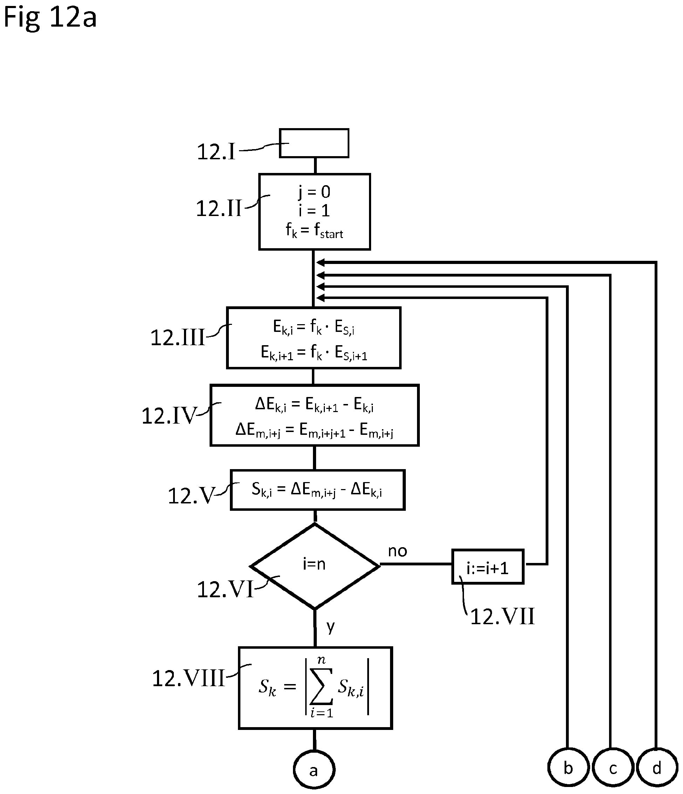

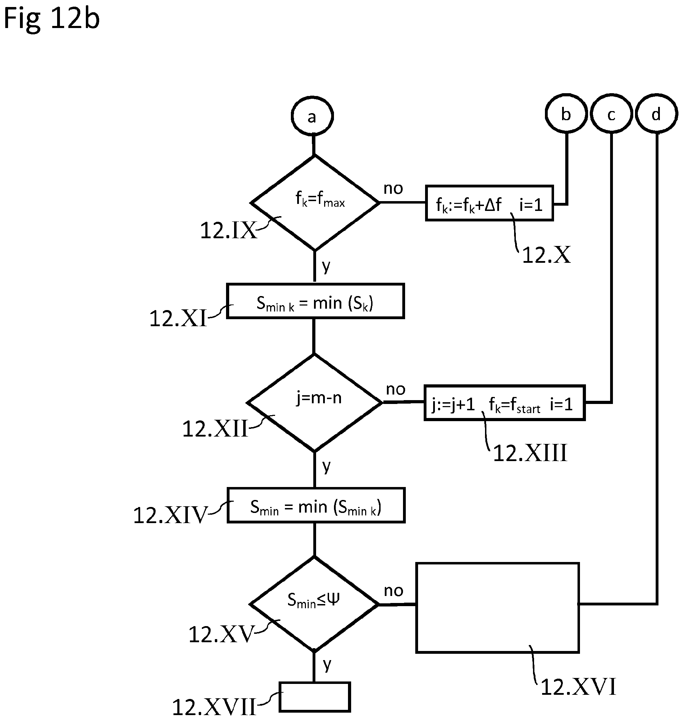

So können die simulierten Ereignisse des formteilspezifischen Ereignismusters $M_S$ innerhalb einer vorgegebenen Fehlerschranke $\psi$ bestimmten Mess-Ereignissen des Mess-Ereignismusters $M_m$ zugeordnet werden. Eine einfache Möglichkeit hierzu bietet die lineare Analyse bzw. ein iteratives Matching-Verfahren, wie es nachfolgend anhand des Flussdiagramms in den Figuren 12a und 12b (in Zusammenschau) erläutert wird, wobei die Anschlussstellen zwischen den Figuren 12a und 12b im Flussdiagramm mit a, b, c, d bezeichnet sind.

Das Verfahren startet im Schritt 12.I. Im Schritt 12.II erfolgt zunächst eine Initialisierung der Variablen j, i und $f_k$. Die Variable j wird zunächst auf 0 gesetzt. Diese Variable könnte man als "Verschiebeindex" bezeichnen, welcher festlegt, um wie viele Ereignisse das formteilspezifische Ereignismuster $M_S$ gegenüber dem Mess-Ereignismuster $M_m$ verschoben wird, um eine optimale Anpassung zu erreichen. Eine außerdem in der Iteration benötigte Laufvariable i wird auf 1 gesetzt. Schließlich wird als Variable ein Skalierungs- oder Streckungsfaktor $f_k$, welcher in festgelegten Inkrementen (z. B. von 0,01), von einem zuvor definierten Minimalwert (z. B. 0,1) und Maximalwert (z. B. 10) laufen kann, auf einen Startwert $f_{start}$ (beispielsweise den Minimalwert) festlegt. Dieser Skalierungsfaktor $f_k$ gibt an, um wieviel die Zeitachse des formteilspezifischen Ereignismusters $M_S$ gegenüber dem Mess-Ereignismusters $M_m$ gestreckt bzw. skaliert wird.

Im Rahmen des iterativen Verfahrens werden dann mehrere Iterationsschleifen durchlaufen.

Eine innere Schleife, welche die Schritte 12.III bis 12.VII umfasst, bezieht sich auf die Laufvariable i, welche von 1 bis n läuft. n ist hier die Anzahl der Ereignisse des formteilspezifischen Ereignismuster $M_S$. Für jede Streckung wird in dieser Schleife aus dem formteilspezifischen Ereignismuster ein neues gestrecktes Muster berechnet und dieses versucht, mit dem Mess-Ereignismuster in Überdeckung zu bringen.

Hierzu werden im Schritt 12.III zwei benachbarte virtuelle bzw. simulierte Ereignisse $E_{S,i}$, $E_{S,i+1}$, des formteilspezifischen Ereignismusters mit dem aktuellen Skalierungsfaktor $f_k$ multipliziert. Im Schritt 12.IV wird dann die zeitliche Differenz der skalierten virtuellen Ereignisse $E_{k,i}$, $E_{k,i+1}$, gebildet und ebenso die Differenz der Mess-Ereignisse $E_{m,i+j}$, $E_{m,i+j+1}$, des Mess-Ereignismusters berechnet. Hierbei gibt i den Laufindex des virtuellen Ereignisses an und j den Indexwert, um den das formteilspezifische Ereignismuster gegenüber dem Mess-Ereignismuster bereits in einer übergeordneten Schleife (siehe Schritt 12.XIII) verschoben wurde. Im ersten Durchlauf mit j = 0 sind die Indizes der simulierten Ereignisse und der Mess-Ereignisse also identisch, d. h. das formteilspezifische Ereignismuster wird so verschoben, dass das erste virtuelle Ereignis auf dem ersten Mess-Ereignis liegt. Bei j = 1 wird das formteilspezifische Ereignismuster dann so verschoben, dass das erste virtuelle Ereignis auf dem zweiten Mess-Ereignis liegt u.s.w.

Weiter wird dann jeweils im Schritt 12.V die Abweichung $S_{k,i}$ zwischen den zuvor berechneten Zeitabständen im formteilspezifischen Ereignismuster und Mess-Ereignismuster ermittelt. Im Schritt 12.VI wird geprüft, ob die Schleife bereits für alle n Ereignisse $E_{S,i}$ durchlaufen wurde, und ansonsten (Abzweig "no") wird im Schritt 12.VII der Wert von i um 1 erhöht und die innere Schleife erneut durchlaufen. Wurden für den aktuellen Skalierungswert $f_k$ alle Abweichungen $S_{k,i}$ für die einzelnen Ereignisabstände berechnet (Abzweig "y"), so wird daraus im Schritt 12.VIII eine Gesamtabweichung $S_k$ gemäß

$$S_k = \left| \sum_{i=1}^{n} S_{k,i} \right| \qquad (9)$$

berechnet.

Im Schritt 12.IX wird dann geprüft, ob bereits der maximale Skalierungsfaktor $f_{max}$ erreicht wurde, und ansonsten (Abzweig "no") wird im Schritt 12.X der Skalierungsfaktor $f_k$ um den Wert $\Delta f$ inkrementiert und die gesamte Schleife erneut durchlaufen. Ansonsten (Abzweig "y") wird im Schritt 12.XI der minimal erreichte Abweichungswert $S_{min,k}$ aller in den vorherigen Schleifendurchläufen ermittelten Abweichungswerte $S_k$ ermittelt.

Da häufig die Anzahl der simulierten virtuellen Ereignisse ungleich der Anzahl der Messereignisse ist, werden wie erläutert durch den Index j in einer weiter übergeordneten Iterationsschleife das Ereignismuster jeweils um ein Ereignis weitergeschoben und dann noch einmal sämtliche Streckungen bzw. Skalierungen durchgeführt, um zu schauen, ob hier eine bessere Überdeckung erreicht wird. Hierzu erfolgt im Schritt 12.XII die Prüfung, ob bereits alle möglichen Verschiebungen j durchlaufen wurden, m ist dabei die Anzahl der Mess-Ereignisse. Ansonsten (Abzweig "no") wird im Schritt 12.XIII der Wert von j um 1 erhöht und der Skalierungsfaktor $f_k$ auf den Wert $f_{start}$ und der Wert i wieder auf 1 reinitialisiert. Andernfalls (Abzweig "y") wird im Schritt 12.XIV wieder der minimale Abweichungswert $S_{min}$ aller in den vorherigen Schleifendurchläufen ermittelten Abweichungswerte $S_{min,k}$ ermittelt.

Dann wird im Schritt 12.XV geprüft, ob letztendlich die Gesamtabweichung $S_{min}$ unter einer vorgegebenen Fehlerschranke $\psi$ liegt. Ist dies nicht der Fall (Abzweig "no"), wird im Schritt 12.XVI ein einzelnes Ereignis eliminiert und der gesamte Prozess in der äußersten Schleife erneut durchlaufen. Zusätzlich zu einer Verschiebung können hier nämlich auch einzelne oder mehrere Ereignisse eliminiert werden, insbesondere Ereignisse aus dem mittleren Bereich des Mess-Ereignismusters, aber auch des formteilspezifischen Ereignismusters. Dabei ist zu beachten, dass eine zuvor erläuterte Verschiebung letztlich ja einer Eliminierung der ersten und letzten Ereignisse für den Vergleich der Ereignismuster gleichkommt, so dass meist keine Eliminierung erforderlich ist. Falls dies nötig ist, könnte aber die äußere Schleife beliebig oft durchlaufen werden, wobei immer andere Ereignisse oder sogar mehrere Ereignisse ausgeschlossen werden, so lange, bis letztendlich die Gesamtabweichung $S_{min}$ unter der Fehlerschranke $\psi$ liegt. In diesem Fall wird das Zuordnungsverfahren im Schritt 12.XVII beendet (Abzweig "y") und die jeweiligen Ereignisse können als korrekt zugeordnet angesehen werden. Wird auch nach Durchlauf aller möglichen Kombinationen oder nach einer definierten Anzahl von Durchläufen und/oder bei Ablauf einer Maximalzeit immer noch keine Gesamtabweichung $S_{min}$ unter der Fehlerschranke $\psi$ erreicht, kann z. B. ein Warnhinweis an einen Bediener ausgegeben werden.

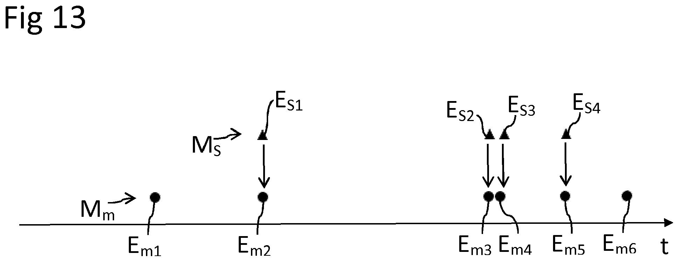

Figur 13 zeigt diesen Zustand für das Mess-Ereignismuster $M_m$ und das formteilspezifische Ereignismuster $M_S$ gemäß Figur 11. Wie man hier sieht liegen die simulierten Ereignisse $E_{s,i}$ mit den gemessenen Ereignissen $E_{m\,i+j}$ für j=1 innerhalb einer vorgegebenen Fehlerschranke passend übereinander ($E_{S1}$ passt zu $E_{m2}$, $E_{S2}$ passt zu $E_{m3}$ usw.). Dass hier noch weitere Ereignisse am Anfang und am Ende des Mess-Ereignismusters $M_m$ zu finden sind, liegt daran, dass innerhalb der Mess-Druckkurve $p_m$ ein größerer Bereich vermessen wurde, als dies zuvor simuliert wurde.

Es wird an dieser Stelle darauf hingewiesen, dass zusätzlich oder alternativ anstelle des formteilspezifischen virtuellen Ereignismusters auch das Mess-Ereignismuster zeitlich skaliert und/oder verschoben werden könnte oder im virtuellen Ereignismuster einzelne Ereignisse eliminiert werden können.

In Figur 14 ist dargestellt, wie die Lage der Schmelzfront SF der Kunststoffschmelze KS im Formteil 1' bzw. in der Kavität der Spritzform 1' auf einer Anzeigeeinrichtung 31 visualisiert werden kann. Dies ist ohne weiteres möglich, da ja aufgrund des erfindungsgemäßen Verfahrens bekannt ist, wann die Schmelzefront bzw. Fließfront SF die einzelnen Ereignisstellen erreicht und aufgrund der ermittelten Fließfrontgeschwindigkeit berechnet werden kann, wann die Fließfront zu welchem Zeitpunkt welchen Ort zwischen den Ereignisstellen erreicht.

Daher kann, wie in Figur 14 gezeigt, beispielsweise das Formteil 1' einfach in einer geeigneten - z. B. durchsichtigen - Darstellung und die Ausbreitung der Schmelze darin visualisiert werden.

In Figur 14 ist hierzu ein Beispiel für ein Terminal 30 bzw. eine Benutzerschnittstelle 30 der Spritzgießmaschine dargestellt, welche neben einem Bildschirm 31 als Anzeigeeinrichtung, hier in Form eines Touchdisplays, auch ein Bedienpanel 36 mit mechanischen Bedienelementen 37, 38, 39, 40 aufweist. Auf dem Touchdisplay 31 ist hier in zwei oberen nebeneinanderliegenden Anzeigebereichen 32a, 32b jeweils die Lage der Fließfront der Kunststoffschmelze im Formteil 1' visualisiert, wobei unterschiedliche Ansichten möglich sind. So erfolgt in Figur 14 im Anzeigebereich 32a oben links die Darstellung des virtuellen Formteils 1' mit der darin visualisierten Ausbreitung der Fließfront SF perspektivisch und im Bildschirmbereich 32b rechts daneben in einer Draufsicht von oben. Vorzugsweise kann der Bediener durch Berühren des Bildschirms in dem jeweiligen Bereich auch die Ansicht drehen und wenden. Die unterschiedlichen Anzeigebereiche 32a, 32b können, wie später noch erläutert, auch dazu dienen, die Ausbreitung der Kunststoffschmelze KS im Formteil 1' unter unterschiedlichen Bedingungen darzustellen.

Unterhalb dieser virtuellen Darstellung der Ausbreitung der Kunststoffschmelze KS im Formteil 1' befinden sich weitere Anzeigebereiche 33a, 33b. Im Anzeigebereich 33b ist als Beispiel ein Diagramm eines Prozesssteuerparameters dargestellt, hier konkret der Einspritzgeschwindigkeit v (in mm/s) bzw. Vorschubgeschwindigkeit des Aktors bzw. der Schnecke 14 über der Aktorposition s (in mm). Auf dem darüber liegenden Anzeigebereich 33a wird die Position der Schnecke innerhalb des Zylinders noch einmal visualisiert.

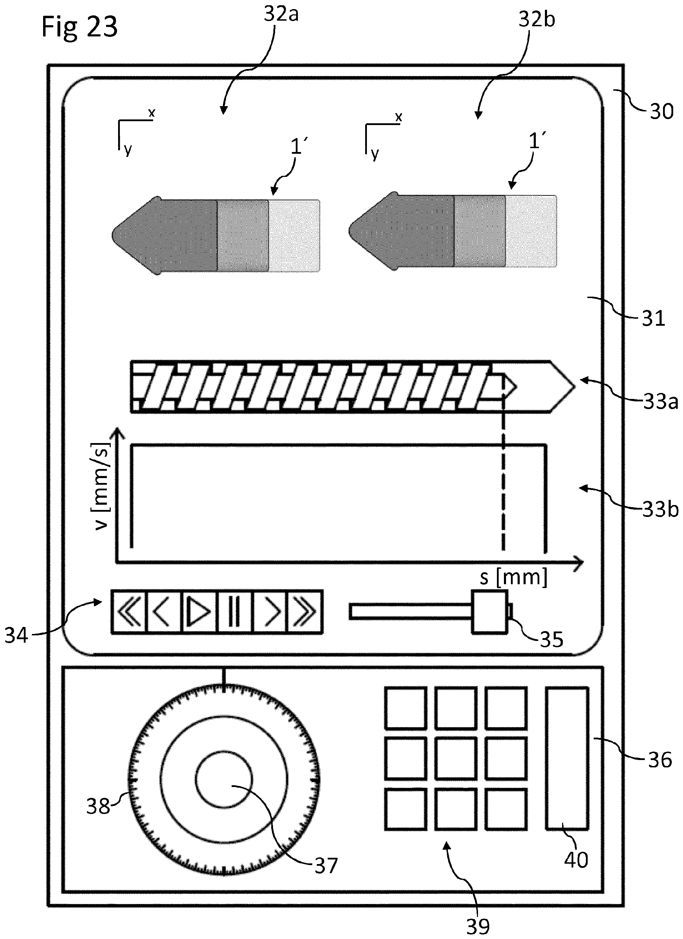

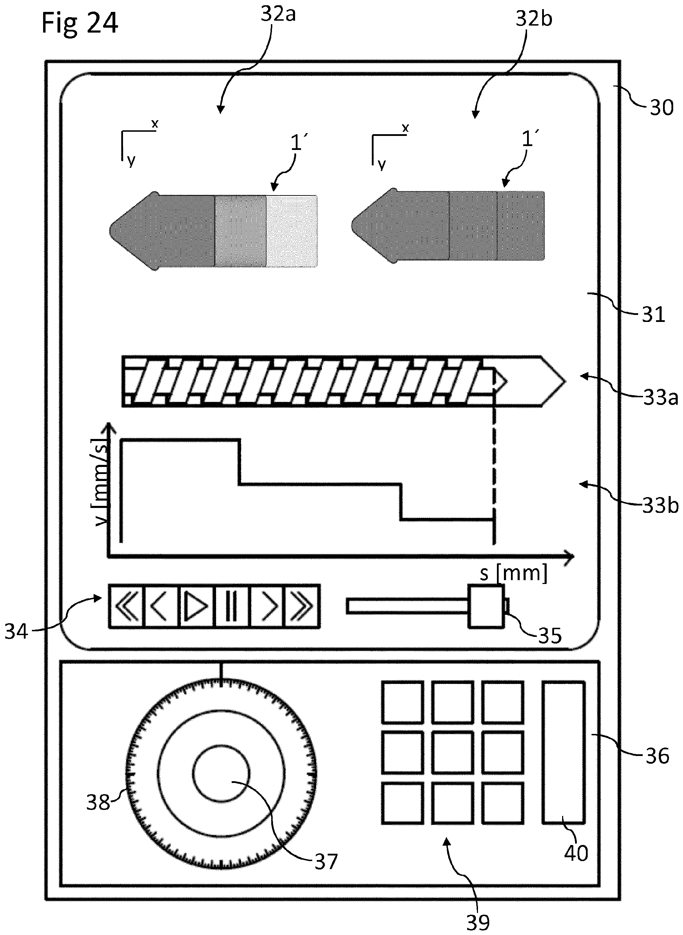

Unter dem Anzeigebereich 33b mit dem Diagramm befinden sich weitere virtuelle Bedienelemente 34, 35, hier links ein Bedienfeld 34, um die dynamische Visualisierung des Spritzgussprozesses bzw. der Formfüllung einzustellen. Wie oben erläutert, erfolgt die Darstellung der Formfüllung ja vorzugsweise in Form einer Animation, z. B. in Form eines Films bzw. einer Slideshow. Im Bedienfeld 34 befinden sich entsprechende Bedienelemente, um die Animation zu stoppen, wieder zu starten, langsam vor- und zurückzulaufen oder schnell vor- und zurückzulaufen. Daneben befindet sich ein virtueller Schieberegler 35, mit dem beispielsweise eine Position der Schmelzefront schnell angesprungen werden kann. Vorzugsweise ist es möglich, dass der Bediener mit Hilfe des Diagramms im Anzeigebereich 33b auch die Vorschubgeschwindigkeit v in Abhängigkeit von der Aktorposition s ändern kann. Dies wäre beispielsweise bei einem Touchscreen möglich, indem der Bediener einfach mit dem Finger die Kurve variiert. Alternativ könnten aber auch weitere, insbesondere virtuelle, Einstellregler oder dergleichen vorhanden sein, die eine genauere Einstellung an der jeweiligen Aktorposition ermöglichen, um so die Funktion zu verändern. Die so veränderte Funktion entspricht dann also nicht mehr der Funktion, wie sie bei der Durchführung eines vorherigen Spritzgussprozesses oder eines simulierten Spritzgussprozesses verwendet wurde, der gerade visualisiert wird, sondern einer "Wunschkurve", die dann als Prozesssteuerungsparameterfunktion für einen nachfolgenden Spritzgussprozess gespeichert werden kann. Dies wird später noch anhand der Figuren 23 und 24 erläutert.

Eine alternative Möglichkeit, möglichst genau die Position der dargestellten Fließfront SF einzustellen, um dann an dieser Stelle beispielsweise einen Prozesssteuerparameter zu variieren, wird durch die mechanischen Bedienelemente des Bedienpanels 36 zur Verfügung gestellt. Hierzu zählt u. a. ein Drehsteller 37 in Form eines Rads, mit dem eine sehr genaue Einstellung möglich ist und bildweise die Schmelzefront SF verstellt werden kann. Im Zentrum dieses Drehstellers 36 befindet sich hier ein Drückschalter 37. Wird dieser gedrückt, kann beispielsweise die Position an dieser Stelle festgehalten werden. Einem solchen Drückschalter 37 kann aber auch eine andere Funktion zugewiesen werden.

Daneben befindet sich hier eine Tastatur 39. Vorzugsweise kann es sich hierbei um eine numerische Tastatur handeln, um einen Wert einzustellen. Außerdem umfasst diese Tastatur hier auch eine Art Enter-Taste 40. Diese kann beispielsweise mit der Funktion belegt werden, dass eine eingestellte Prozesssteuerungsparameterfunktion, beispielsweise die zuvor eingestellte Funktion für die Einspritzgeschwindigkeit v in Abhängigkeit von der Aktorposition s, für die Steuerung eines nachfolgenden Spritzgussprozesses übernommen wird, d. h. diese Funktion als Soll-Funktion gespeichert wird.

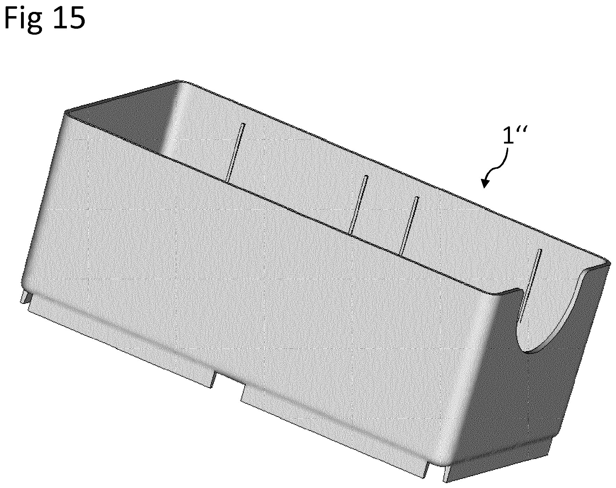

Figur 15 zeigt ein weiteres Formteil 1", mit dem ein weiterer Versuch zur Überprüfung des erfindungsgemäßen Verfahrens durchgeführt wurde.

Das Formteil 1" ist hier ein Stapelbaustein mit einer konstanten Wandstärke von 1,5 mm. Die Grundfläche beträgt 160 x 75 mm. Auch hier wurde mit Autodesk Moldflow ein FEM-Netz generiert, wobei eine Elementegröße von 1,5 mm in einem 3D-Volumenmodell mit vier Schichten über Wandstärke angenommen wurde. Die gesamte CAD-Geometrie wurde wieder als Step-Datei (.stp) zur Verfügung gestellt. Dieser Stapelbaustein wurde zentral an der Unterseite über einem Stangenanguss angespritzt. Das Angusssystem war dabei nicht Teil der numerischen Analyse bzw. Simulation. Auch hier wurden als Simulationsdaten für die FEM-Berechnung wieder eine Werkzeugtemperatur von 30°C, eine Massetemperatur von 250°C, der Volumenstrom als 25 cm$^3$/s und als Material wieder ABS-Terluran GP-22 angenommen. Die simulierte Umschaltung auf Nachdruck erfolgte auch hier bei 98 % Füllung.

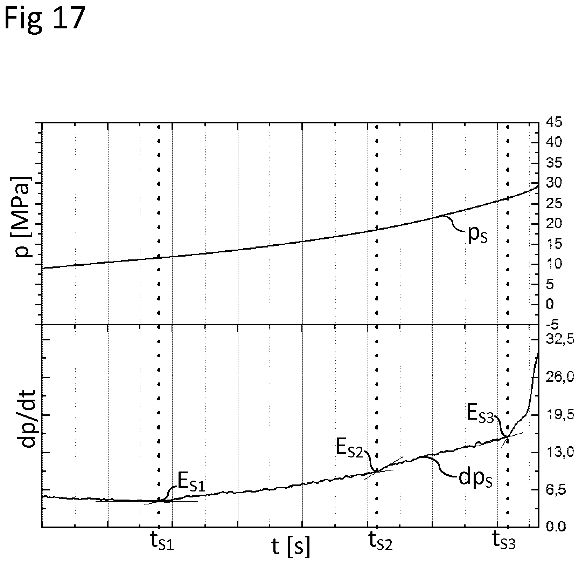

Figur 15 zeigt eine mit diesem Verfahren numerisch berechnete, also simulierte Massedruckkurve, wobei wieder der für die spätere Analyse ausgewählte Bereich gestrichelt eingezeichnet ist. Figur 17 zeigt dann wieder diesen ausgewählten Teil der simulierten Druckkurve (oben) und darunter die nach der Zeit differenzierte Druckkurve mit der Flankenanalyse. Hier wurden insgesamt drei besondere Ereignisse $E_{S1}$, $E_{S2}$, $E_{S3}$ ermittelt.

Entsprechend wurde dann ein echter Spritzgießversuch durchgeführt, wobei die gleiche Spritzgießanlage wie beim ersten Versuch mit der einfachen Stufenplatte verwendet wurde. Es wurde auch hier eine geschwindigkeitsgeregelte Einspritzung mit einem Volumenstrom von 25 cm$^3$/s entsprechend dem simulierten Volumenstrom durchgeführt, und auch die anderen Einstellparameter wurden wie bei der virtuelle Einspritzung gewählt.

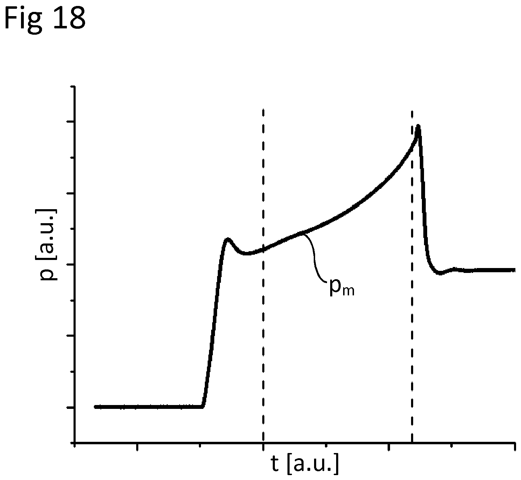

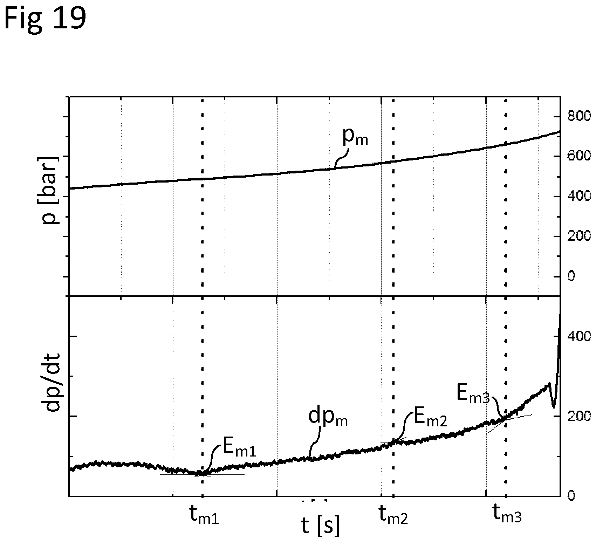

Figur 18 zeigt die dabei ermittelte Druckkurve, wieder mit dem darin markierten ausgewählten Bereich für die weitere Analyse, und in Figur 19 ist wieder oben dieser ausgewählte Bereich der Druckkurve und darunter die nach der Zeit differenzierte Druckkurve mit der Flankenanalyse dargestellt. Auch hier wurden wie bei der Simulation bei einer Flankenanalyse drei Ereignisse $E_{m1}$, $E_{m2}$, $E_{m3}$ gefunden.

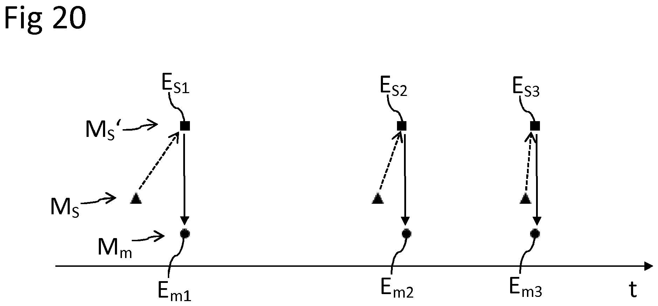

In Figur 20 sind noch einmal über der Zeit t das Mess-Ereignismuster $M_m$ (untere Reihe) und das virtuelle formteilspezifische Ereignismuster $M_S$ (mittlere Reihe) dargestellt. Darüber ist in einer oberen Reihe ein formteilspezifisches Ereignismuster $M_S$' aufgetragen, welches aus dem ursprünglichen formteilspezifischen Ereignismuster $M_S$ erzeugt wurde, indem dieses lediglich so verschoben wurde, dass sich die jeweils ersten Ereignisse überdecken, und mit einem Streckungsfaktor $f_k$ = 0,90 (mit $f_{start}$ = 0,1 und Streckungsinkrement $\Delta f$ = 0,01) zeitlich skaliert die geringste Abweichung liefert. Dies zeigt, wie die virtuellen Ereignisse des formteilspezifischen simulierten Ereignismusters $M_S$ den Messereignissen des Mess-Ereignismusters $M_m$ innerhalb der vorgegebenen Fehlerschranke zugeordnet werden können.

Anhand der zugeordneten Ereignisse konnte wieder das Eintreffen der Schmelzfront an den bestimmten Ereignisstellen im Formteil 1 "und darauf basierend dann auch die Fließfrontgeschwindigkeit der Schmelzfront ermittelt werden. Mit Hilfe dieser Daten war es dann möglich, den gesamten Einspritzvorgang in Abhängigkeit von der Maschinenzeit bzw. Einspritzzeit und/oder der Aktorposition zu visualisieren.

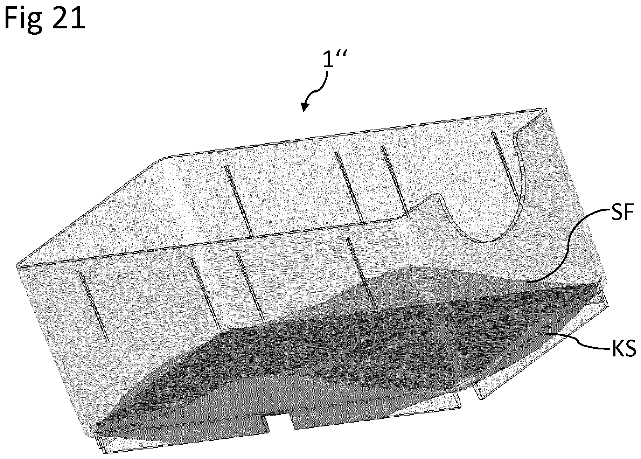

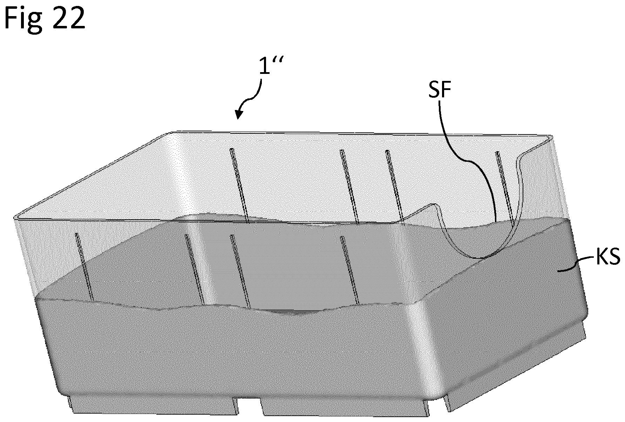

Hierzu sind in den Figuren 21 und 22 zwei Beispielbilder dargestellt. Figur 21 zeigt dabei das Eintreffen der Schmelzfront an der ersten Mess-Ereignisstelle. Dies ist dann der Fall, wenn die Schmelzfront an der Unterseite des Bausteins nach unten herausragende Wandabschnitte erreicht. Figur 22 zeigt das Eintreffen der Schmelzfront an der zweiten Mess-Ereignisstelle, nämlich dann, wenn die Schmelzfront einen konkaven Ausschnitt an der einen Schmalseite des Bausteins erreicht. Auch zu diesem Zeitpunkt gibt es eine signifikante Änderung im Druckverlauf.

Diese Visualisierungen zeigen eindrucksvoll, wie sich mit Hilfe des erfindungsgemäßen Verfahrens die Formfüllung (Schmelzeposition) in Abhängigkeit von der Maschinenzeit bzw. Einspritzzeit und/oder der Aktorposition darstellen lässt und die dabei ermittelten Prozessparameterwerte und Visualisierungen auch dafür genutzt werden können, um Spritzgussprozesse schneller als bisher zu optimieren.

Wie eine schnelle Optimierung des Spritzgussprozesses mit Hilfe der Visualisierung möglich ist, wird noch einmal anhand des Beispiels aus Figur 14 mit Hilfe der nachfolgenden Figuren 23, 24 erläutert. Diese zeigen jeweils wieder das Terminal 30 und das Display 31 mit der Visualisierung der Formfüllung in der einfachen Spritzform 1' gemäß Figur 6. Die Anzeigebereiche 32a, 32b, 33a, 33b sind im Display 31 wieder in ähnlicher Weise belegt wie bei dem in Figur 14 erläuterten Beispiel. Auch befinden sich auf dem Bildschirm 31 hier die gleichen Bedienelemente 34, 35. Weiterhin ist auch das Bedienpanel 36 mit den mechanischen Bedienelementen in der gleichen Form aufgebaut.

Hier hat der Bediener jedoch im Anzeigebereich 32a die virtuelle Darstellung der Spritzform 1' so eingestellt, dass sie ebenfalls die Spritzform von oben zeigt. Außerdem sind hier in Form von unterschiedlichen Graustufen die unterschiedliche Schmelzefrontgeschwindigkeiten bzw. Fließfrontgeschwindigkeiten innerhalb des virtuellen Formteils 1' markiert. Wie hier deutlich zu sehen ist, nimmt mit unterschiedlichen Wandstärken des Formteils 1', d. h. immer dann, wenn die Schmelzefront im Formteil eine niedrigere Wandstärke passiert, die Fließfrontgeschwindigkeit zu, da die Vorschubgeschwindigkeit v der Schnecke in Abhängigkeit von der Schneckenposition s konstant und somit auch der Volumenstrom konstant ist, wie dies in dem Diagramm im Anzeigebereich 33b dargestellt ist. Dies ist jedoch ggf. gar nicht wünschenswert. Eine mögliche Optimierungsstrategie bei der Prozesseinstellung wäre, wenn die Fließfrontgeschwindigkeit über den gesamten Fließweg konstant wäre.

Um dies zu erreichen, kann der Bediener mit Hilfe des Diagramms im Anzeigebereich 33b und der Bedienelementen des Bedienpanels 36 an genau definierten Aktorpositionen, welche genau den Positionen entsprechen, an denen die Fließfront jeweils einen neuen Abschnitt innerhalb der Spritzform bzw. des Formteils 1' erreicht (d. h. an den Ereignisstellen) die Vorschubgeschwindigkeit v herabgesetzt. Anschließend kann er mit dieser vorgegebenen Vorschubgeschwindigkeitsfunktion, wie sie nun im Anzeigebereich 33b in Figur 24 dargestellt ist, zunächst eine Simulation des Spritzgussprozesses durchführen. Das Ergebnis dieser Simulation bzw. numerischen Berechnung kann dann im Bildschirmabschnitt 32b dargestellt werden, so dass eine genaue Gegenüberstellung des Ergebnisses des vorherigen Spritzgussprozesses und des zu erwartenden neuen Spritzgussprozesses visualisiert wird (siehe Figur 24).

Der Bediener kann also sofort sehen, dass die Fließfrontgeschwindigkeit nun im ganzen Formteil 1' konstant sein wird, was durch die gleichmäßig graue Darstellung zu erkennen ist. Anschließend kann der Bediener auf den Enter-Knopf 40 im Bedienpanel 36 drücken und somit die eingestellte Prozesssteuerparameterfunktion, nämlich hier die im Anzeigebereich 33b dargestellte, optimierte Funktion der Vorschubgeschwindigkeit v in Abhängigkeit von der Schneckenposition s, übernehmen und damit den nächsten Spritzgussprozess durchführen.

Eine Optimierung - z. B. eine Einstellung einer möglichst konstanten Fließfrontgeschwindigkeit über den gesamten Fließweg - kann auch automatisch erfolgen. Hierbei kann ein Algorithmus z. B. in Abhängigkeit einer vorgewählten konstanten Fließfrontgeschwindigkeit das passende Geschwindigkeitsprofil des Aktors (Einspritzgeschwindigkeitsprofil) berechnen und die Steuerung des Aktors kann dann entsprechend dem berechneten Einspritzgeschwindigkeitsprofil erfolgen. Auch hier kann der Bediener ggf. auf Knopfdruck die automatische Berechnung auswählen.

Bei den obigen bevorzugten Ausführungsbeispielen waren keine speziellen Messeinrichtungen innerhalb der Kavität der Spritzform erforderlich, da auf geschickte Weise mit Hilfe der Ereignismuster die Fließfrontposition innerhalb des Formteils und damit auch alle weiteren gewünschten Prozessparameterwerte ermittelbar waren.

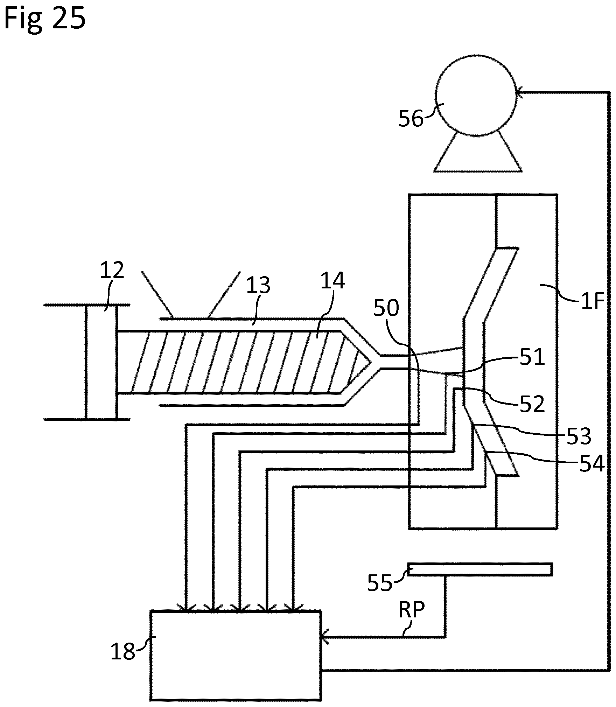

Anhand von Figur 25 wird nun noch einmal kurz dargestellt, dass es auch möglich ist, weitere Messwerte an anderen Messstellen 50, 51, 52, 53, 54 aufzuzeichnen, wenn entsprechende Sensoren in der Spritzform 1F angeordnet sind. Alle die dort ermittelten Messwerte können der Steuereinrichtung 18 zugeführt werden. In diesem Fall kann die Schmelzefrontposition bzw. Fließfrontposition unmittelbar ermittelt werden, indem festgestellt wird, wann die einzelnen Sensoren wie reagieren. Im Prinzip könnte dann auf die Komponenten in der Steuereinrichtung 18 verzichtet werden, die dazu dienen, die Ereignismuster zu ermitteln und mit Hilfe dieser dann die Fließfrontpositionen zu berechnen. Benötigt wird dann aber nach wie vor eine Auswerteeinheit 26, um auf Basis der erhaltenen Messwerte die Fließfrontposition und die weiteren Prozessparameterwerte zu ermitteln. Ebenso wird die Anzeigen-Ansteuereinrichtung 27 benötigt.

Als eine Alternative ist in Figur 25 lediglich grob schematisch dargestellt, dass es auch möglich ist, mit einem Röntgensystem mit einem Röntgenstrahler 56 auf einer Seite und einem Röntgendetektor 55 auf der anderen Seite der Spritzform Röntgenprojektionsdaten RP zu ermitteln und diese einer Steuereinrichtung 18 zuzuführen, die daraus dann Bilder rekonstruiert bzw. die erhaltenen Bilder nutzt, um die Fließfrontposition in geeigneter Weise während des Spritzgussprozesses in Abhängigkeit von der Einspritzzeit bzw. Aktorposition zu ermitteln. Alternativ könnte statt des Röntgensystems auch ein Ultraschallsystem verwendet werden.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Insbesondere ist die Erfindung - auch wenn hier als Beispiele jeweils Spritzformen bzw. Werkzeuge mit einer Kavität verwendet wurden - in gleicher oder analoger

**EP 3 291 959 B1**

Weise auch an Spritzformen mit mehreren Kavitäten (jeweils für ein Formteil) nutzbar, die z. B. auch über einen gemeinsamen Einspritzkanal gekoppelt sein können. Wenn alle Kavitäten identisch sind, reicht es unter Umständen aus, die Simulation nur für eine einzelne der Kavitäten durchzuführen, um ein charakteristisches formteilspezifisches Ereignismuster für das betreffende Werkzeug zu ermitteln, welches später dann einem Mess-Ereignismuster zugeordnet werden kann. Auch die Einstellung, welche Parameter jeweils visualisiert werden, ist beliebig. So besteht beispielsweise auch die Möglichkeit, die (wie ja ausführlich dargelegt) über die Fließfrontgeschwindigkeit und Druckerhöhung zwischen den Ereignisstellen berechenbaren Prozessparameter Viskosität und/oder Schergeschwindigkeit und/oder Schubspannung am bzw. im Formteil zu visualisieren, z. B. im Anzeigebereich 32a bzw. als Vorschau im Anzeigebereich 32b darzustellen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Modul" nicht aus, dass diese auch aus mehreren, gegebenenfalls auch räumlich getrennten, Untereinheiten bestehen.

**Patentansprüche**

1. Verfahren zum Ermitteln und Visualisieren von Prozessparameterwerten eines Spritzgussprozesses in einer Spritzform (1F) umfassend

   - Ermitteln von geometrischen Daten der Spritzform (1F) und/oder eines Formteils (1, 1', 1"), welches in der Spritzform (1F) herzustellen ist,
   - Durchführen eines Spritzguss-Prozesses unter Nutzung der Spritzform (1F) und Erfassen von Messwerten in Abhängigkeit von einer Einspritzzeit und/oder einer Aktorposition (s).
   - Ermitteln einer Fließfrontposition innerhalb der Spritzform (1F) bzw. des Formteils (1', 1") in Abhängigkeit von der Einspritzzeit und/oder der Aktorposition und gegebenfalls einer Fließfrontgeschwindigkeit in Abhängigkeit von der Fließfrontposition als Prozessparameterwerte auf Basis der Messwerte und der geometrischen Daten der Spritzform (1F),
   - optional Ermitteln weiterer Prozessparameterwerte in Abhängigkeit von der Einspritzzeit und/oder der Aktorposition und/oder der Fließfrontposition,
   - Anzeigen zumindest eines Teils der ermittelten Prozessparameterwerte in Abhängigkeit von der Einspritzzeit und/oder Aktorposition und/oder Fließfrontposition auf einer Anzeigeeinrichtung (31).

2. Verfahren nach Anspruch 1, wobei zumindest die Fließfrontposition in Abhängigkeit von der Einspritzzeit und/oder Aktorposition (s) auf der Anzeigeeinrichtung (31) innerhalb einer virtuellen Spritzform und/oder eines virtuellen Formteils (1', 1"), vorzugsweise dynamisch, angezeigt wird.

3. Verfahren nach Anspruch 1 oder 2, wobei die Fließfrontgeschwindigkeit und /oder zumindest einer der weiteren Prozessparameterwerte, vorzugsweise als farb- oder graustufencodierte Werte, in Abhängigkeit von der Fließfrontposition innerhalb der virtuellen Spritzform und/oder eines virtuellen Formteils (1', 1") angezeigt werden.

4. Verfahren nach einem der vorstehenden Ansprüche, wobei die weiteren Prozessparameterwerte maschinenunabhängige Prozessparameterwerte umfassen, vorzugsweise zumindest eine der folgenden rheologischen Größen:

   - Schergeschwindigkeit
   - Schmelzeviskosität
   - Wandschubspannung.

5. Verfahren nach einem der vorstehenden Ansprüche, wobei zusätzlich Prozesssteuerungsparameterwerte (v) in Abhängigkeit von der Einspritzzeit und/oder Aktorposition (s) und/oder Fließfrontposition angezeigt werden.

6. Verfahren nach einem der vorstehenden Ansprüche, wobei die Messwerte an Messpositionen (50, 51, 52, 53, 54) außerhalb oder innerhalb der Spritzform (1F) ermittelt werden und vorzugsweise Druckwerte und/oder Temperaturwerte umfassen.

7. Verfahren nach einem der vorstehenden Ansprüche, wobei die Messwerte Röntgenprojektionswerte (RP) umfassen.

8. Verfahren nach einem der vorstehenden Ansprüche, wobei die Ermittlung der einer Fließfrontposition und/oder der Fließfrontgeschwindigkeit sowie gegebenenfalls der weiterer Prozessparameterwerte in der Spritzform (1F) auf Basis der Messwerte und der geometrischen Daten der Spritzform (1F) folgende Verfahrensschritte umfasst

- Ermitteln einer virtuellen formteilspezifischen Druckkurve ($p_S$) eines Spritzgussprozesses unter Nutzung der geometrischen Daten,
- Ermitteln eines formteilspezifischen Ereignismusters ($M_S$) auf Basis der virtuellen formteilspezifischen Druckkurve ($p_S$), wobei das formteilspezifische Ereignismuster ($M_S$) eine Mehrzahl von singulären, mit charakteristischen Ereignisstellen ($F_1$, $F_2$, $F_3$,...) der Formteilgeometrie verknüpften virtuellen Ereignissen ($E_{S1}$, $E_{S2}$, $E_{S3}$,...) umfasst, denen jeweils zumindest eine relative Zeitinformation ($t_{S1}$, $t_{S2}$, $t_{S3}$,...) und/oder virtuelle Aktorposition sowie zumindest ein Positionsdatum zugeordnet ist, welches eine Position einer Schmelzfront (SF) des Spritzgussmaterials (KS) in der Spritzform (1F) definiert,
- Durchführen eines Spritzguss-Prozesses unter Nutzung der Spritzform (1F) und Ermittlung einer Mess-Druckkurve ($p_m$) während des Spritzguss-Prozesses,
- Ermitteln eines Mess-Ereignismusters ($M_m$) auf Basis der Mess-Druckkurve ($p_m$), wobei das Mess-Ereignismuster ($M_m$) eine Mehrzahl von singulären Mess-Ereignissen ($E_{m1}$, $E_{m2}$, $E_{m3}$,...) aufweist, denen jeweils zumindest eine Zeitinformation ($t_{m1}$, $t_{m2}$, $t_{m3}$,...) und/oder Aktorposition zugeordnet ist,
- Zuordnung von virtuellen Ereignissen ($E_{S1}$, $E_{S2}$, $E_{S3}$,...) des formteilspezifischen Ereignismusters ($M_S$) zu Mess-Ereignissen ($E_{m1}$, $E_{m2}$, $E_{m3}$,...) des Mess-Ereignismusters ($M_m$),
- Ableiten von Prozessparameterwerten auf Basis der den virtuellen Ereignissen ($E_{S1}$, $E_{S2}$, $E_{S3}$,...) zugeordneten Positionsdaten und den Zeitinformationen ($t_{m1}$, $t_{m2}$, $t_{m3}$,...) und/oder Aktorpositionen, welche den diesen virtuellen Ereignissen ($E_{S1}$, $E_{S2}$, $E_{S3}$,...) jeweils zugeordneten Mess-Ereignissen ($E_{m1}$, $E_{m2}$, $E_{m3}$,...) zugeordnet sind.

9. Verfahren nach Anspruch 8, wobei im Falle eines variablen Volumenstroms während des Spritzguss-Prozesses eine dabei ermittelte Mess-Druckkurve ($p_m$) in eine zeitkorrigierte Mess-Druckkurve ($p_{mf}$) umgerechnet wird, auf deren Basis dann das Mess-Ereignismuster ($M_m$) ermittelt wird.

10. Verfahren nach Anspruch 8 oder 9, wobei die virtuellen Ereignisse ($E_{S1}$, $E_{S2}$, $E_{S3}$,...) des charakteristischen Ereignismusters ($M_S$) auf Basis der zeitlichen Änderung der Steigung der virtuellen formteilspezifischen Druckkurve ($p_S$) bestimmt werden und/oder wobei die Mess-Ereignisse ($E_{m1}$, $E_{m2}$, $E_{m3}$,...) des Mess-Ereignismusters ($M_m$) auf Basis der zeitlichen Änderung der Steigung der Mess-Druckkurve ($p_m$) bestimmt werden.

11. Verfahren zur Steuerung einer Spritzgießanlage (10), wobei

- mit einem Verfahren nach einem der vorstehenden Ansprüche für einen ersten Spritzgussprozess mit einer Spritzform (1F) zumindest die Fließfrontposition und gegebenenfalls die Fließfrontgeschwindigkeit innerhalb der Spritzform (1F) bzw. des Formteils (1', 1") sowie optional weitere Prozessparameterwerte in der Spritzform (1F) in Abhängigkeit von der Einspritzzeit und/oder Aktorposition ermittelt und zumindest teilweise auf einer Anzeigeeinrichtung (31) angezeigt werden,
- und eine Variation einer Prozesssteuerungsparameterfunktion unter Nutzung der angezeigten Fließfrontposition und/oder Fließfrontgeschwindigkeit und/oder weiteren Prozessparameterwerte angeboten werden,
- und bei Empfang eines Steuerungssignals die Prozesssteuerungsparameterfunktion in einer Steuereinrichtung (18) der Spritzgießanlage (10) für einen weiteren Spritzgussprozess mit dieser Spritzform (1F) verwendet wird.

12. Verfahren nach Anspruch 11, wobei mittels einer Benutzerschnittstelle unter Nutzung der Anzeigeeinrichtung (18) zumindest eine Position innerhalb der Spritzform (1F) bzw. des Formteils (1', 1") markiert wird, mit welcher Position eine Fließfrontgeschwindigkeit und/oder ein weiterer Prozessparameterwert und/oder ein Prozesssteuerungsparameterwert verknüpft ist.

13. Prozessparameterwert-Ermittlungseinrichtung (20) zum Ermitteln und Visualisieren von Prozessparameterwerten eines Spritzgussprozesses in einer Spritzform (1F) umfassend

- eine erste Schnittstelle (21) zum Ermitteln von geometrischen Daten der Spritzform (1F) und/oder eines Formteils (1, 1', 1"), welches in der Spritzform (1F) herzustellen ist,
- eine zweite Schnittstelle (24) zur Erfassung von Messwerten in Abhängigkeit von einer Einspritzzeit und/oder einer Aktorposition (s) während eines Spritzguss-Prozesses an einer Spritzgießanlage (10) unter Nutzung der Spritzform,
- eine Auswertungseinheit (26) zum Ermitteln einer Fließfrontposition innerhalb der Spritzform (1F) bzw. des Formteils (1', 1") in Abhängigkeit von der Einspritzzeit und/oder der Aktorposition (s) und gegebenenfalls einer Fließfrontgeschwindigkeit in Abhängigkeit von der Fließfrontposition als Prozessparameterwerte auf Basis der Messwerte und der geometrischen Daten der Spritzform (1F),
- eine Anzeigen-Ansteuerungseinrichtung (27) zur Ansteuerung einer Anzeigeeinrichtung zum Visualisieren zumindest eines Teils der ermittelten Prozessparameterwerte in Abhängigkeit von der Einspritzzeit und/oder Aktorposition und/oder Fließfrontposition auf der Anzeigeeinrichtung (31).

14. Steuereinrichtung (18) für eine Spritzgießanlage (10), umfassend eine Prozessparameterwert-Ermittlungseinrichtung (20) nach Anspruch 13, um zumindest eine Anzahl von Prozessparameterwerten für einen ersten Spritzgussprozess mit einer Spritzform (1F) die Fließfrontposition und gegebenenfalls die Fließfrontgeschwindigkeit innerhalb der Spritzform (1F) bzw. des Formteils (1', 1") sowie optional weitere Prozessparameterwerte in der Spritzform (1F) in Abhängigkeit von der Einspritzzeit und/oder Aktorposition (s) zu ermitteln und zumindest teilweise auf einer Anzeigeeinrichtung (31) anzuzeigen,

wobei die Steuereinrichtung (18) so ausgebildet ist, dass eine Variation einer Prozesssteuerungsparameterfunktion unter Nutzung der angezeigten Fließfrontposition und/oder Fließfrontgeschwindigkeit und/oder weiterer Prozessparameterwerte angeboten werden, und bei Empfang eines Steuerungssignals die Prozesssteuerungsparameterfunktion in einer Steuereinrichtung (18) der Spritzgießanlage (10) für einen weiteren Spritzgussprozess mit dieser Spritzform (1F) verwendet wird.

15. Spritzgießanlage (10) mit einer Spritzgießdüse (16), einem Aktor (14), um Spritzgussmaterial (KS) aus der Spritzgießdüse (16) in eine an die Spritzgießanlage (10) angeschlossene Spritzform (1F) einzuspritzen, und eine Steuereinrichtung (18) zur Ansteuerung des Aktors (14),

wobei die Spritzgießanlage (10) eine Prozessparameterwert-Ermittlungseinrichtung (20) nach Anspruch 13 umfasst und/oder die Steuereinrichtung (18) gemäß Anspruch 14 ausgebildet ist.

## Claims

1. Method of determining and visualizing process parameter values of an injection moulding process in an injection mould (1F), which method comprises the steps of

   - determining geometric data of the injection mould (1F) and/or of a form part (1, 1', 1") to be manufactured in the injection mould (1F),
   - carrying out an injection moulding process using the injection mould (1F) and recording measurement values as a function of the injection time and/or an actuator position (s),
   - determining, as process parameter values on the basis of the measurement values and geometry data of the injection mould (1F), a flow front position inside the injection mould (1F) or the form part (1', 1") as a function of the injection time and/or an actuator position and, as appropriate, a flow front rate as a function of the flow front position,
   - optionally determining further process parameter values as a function of the injection time and/or the actuator position (s) and/or the flow front position,
   - showing at least part of the determined process parameter values as a function of the injection time and/or the actuator position and/or flow front position in a display arrangement (31).

2. Method according to claim 1, wherein at least the flow front position is shown in the display arrangement (31), preferably dynamically, inside a virtual injection mould and/or inside a virtual form part (1', 1") as a function of the injection time and/or an actuator position (s).

3. Method according to claim 1 or claim 2, wherein the flow front rate and/or at least one of the further process parameter values are shown inside a virtual injection mould and/or inside a virtual form part (1', 1") as a function of the flow front position, preferably as colour-coded or greyscale-coded values.

4. Method according to any of the preceding claims, wherein the further process parameter values comprise machine-independent process parameter values, preferably at least one of the following rheological values:

   - shear rate;
   - melt viscosity;
   - wall shear stress.

5. Method according to any of the preceding claims, wherein further process control parameter values (v) are shown as a function of the injection time and/or actuator position (s) and/or flow front position.

6. Method according to any of the preceding claims, wherein the measurement values are determined at measurement positions (50, 51, 52, 53, 54) on the outside or on the inside of the injection mould (1F) and preferably comprise pressure values and/or temperature values.

7. Method according to any of the preceding claims, wherein the measurement values comprise X-ray projection values (RP).

8. Method according to any of the preceding claims, wherein the step of determining a flow front position and/or a flow front rate in the injection mould (1F) as well as the further process parameter values, as appropriate, on the basis of the measurement values and the geometry data of the injection mould (1F) comprise the following method steps

   - determining a virtual part-specific pressure curve (ps) of an injection moulding process on the basis of the geometric data,
   - determining a part-specific event pattern (Ms) on the basis of the virtual part-specific pressure curve (ps), whereby the part-specific event pattern (Ms) comprises a plurality of unique virtual events ($E_{S1}$, $E_{S2}$, $E_{S3}$,...) linked to characteristic event locations ($F_1$, $F_2$, $F_3$,...) of the part geometry, to each of which is assigned at least one relative time information ($t_{S2}$, $t_{S2}$, $t_{S3}$,...) and/or virtual actuator position as well as at least one position datum, which defines a position of a melt front (SF) of the injection moulding material (KS) in the injection mould (1F),
   - carrying out an injection moulding process using the injection mould (1F) and determining a measured pressure curve ($p_m$) during the injection moulding process,
   - determining a measurement event pattern ($M_m$) on the basis of the measured pressure curve ($p_m$), wherein the measurement event pattern ($M_m$) comprises a plurality of unique measurement events ($E_{m1}$, $E_{m2}$, $E_{m3}$,...), to each of which is assigned at least one time information ($tm_1$, $tm_2$, $t_{m3}$,...) and/or actuator position,
   - allocating virtual events ($E_{S1}$, $E_{S2}$, $E_{S3}$,...) of the part-specific event pattern ($M_S$) to measurement events ($E_{m1}$, $E_{m2}$, $E_{m3}$,...) of the measurement event pattern (Mm),
   - deriving process parameter values on the basis of the position data assigned to the virtual events ($E_{S1}$, $E_{S2}$, $E_{S3}$,...) and on the basis of the time information ($t_{m1}$, $t_{m2}$, $t_{m3}$,...) and/or actuator positions assigned to the measurement events ($E_{m1}$, $E_{m2}$, $E_{m3}$,...) that were allocated to these virtual events ($E_{S1}$, $E_{S2}$, $E_{S3}$,...).

9. Method according to claim 8, wherein, in the case of a variable volumetric flow during the injection moulding procedure, a measured pressure curve ($p_m$) determined therein is converted to a time-corrected measurement pressure curve ($p_{mf}$), on the basis of which the measurement event pattern ($M_m$) is determined.

10. Method according to claim 8 or claim 9, wherein the virtual events ($E_{S1}$, $E_{S2}$, $E_{S3}$,...) of the characteristic event pattern (Ms) are determined on the basis of the temporal change of the slope of the virtual part-specific pressure curve (ps) and/or wherein the measurement events ($E_{m1}$, $E_{m2}$, $E_{m3}$,...) of the measurement event pattern ($M_m$) are determined on the basis of the temporal change of the slop of the measurement pressure curve ($p_m$).

11. Method of controlling an injection moulding arrangement (10), wherein,

   - using a method according to any of the preceding claims, for a first injection moulding procedure with an injection mould (1F), at least the flow front position and the flow front rate, as appropriate, inside the injection mould (1F) or the form part (1', 1"), as well as other optional process parameter values in the injection mould (1F) are determined as a function of the injection time and/or actuator position and shown at least in part in a display arrangement (31),
   - and the option of varying a process control parameter function by using the displayed flow front position and/or flow front rate and/or the further process parameter values is proffered,
   - and upon receiving a control signal, the process control parameter function is used in a control unit (18) of the injection moulding arrangement (10) for a further injection moulding procedure with that injection mould (1F).

12. Method according to claim 11, wherein, with the aid of a user interface and using the display arrangement (18), at least one position inside the injection mould (1F) or the form part (1', 1") is marked, and a flow front rate and/or a further process parameter value and/or a process control parameter value is linked to that position.

13. Process parameter value determining arrangement (20) for determining and visualizing process parameter values of an injection moulding procedure inside an injection mould (1F), comprising

- a first interface (21) for determining geometry data of the injection mould (1F) and/or a form part (1, 1', 1") to be manufactured in the injection mould (1F),
- a second interface (24) to acquire measurement values as a function of injection time and/or actuator position (s) during an injection moulding procedure of an injection moulding arrangement using that injection mould,
- an analysis unit (26) adapted to determine a flow front position inside the injection mould (1F) or form part (1', 1") as a function of injection time and/or actuator position (s) and, as appropriate, a flow front rate as a function of the flow front position as process parameter values on the basis of the measurement values and the geometry data of the injection mould (1F),
- a display control arrangement (27) for controlling a display arrangement to visualize at least part of the determined process parameter values as a function of injection time and/or actuator position and/or flow front position in the display arrangement (31).

14. Control arrangement (18) for an injection moulding arrangement (10), comprising a process parameter value determining arrangement (20) according to claim 13, to determine at least a number of process parameter values for a first injection moulding process with an injection mould (1F), the flow front position and flow front rate as appropriate inside the injection mould (1F) or the form part (1', 1") as well as optional further process parameter values in the injection mould (1F) as a function of injection time and/or actuator position (s) and to show these at least in part in a display arrangement (31),
whereby the control arrangement (18) is realised to proffer the option of varying a process control parameter function by using the displayed flow front position and/or flow front rate and/or the further process parameter values, and upon receiving a control signal, the process control parameter function is used in a control unit (18) of the injection moulding arrangement (10) for a further injection moulding procedure with that injection mould (1F).

15. Injection moulding arrangement (10) comprising an injection nozzle (16), an actuator (14) to inject injection material (KS) from the nozzle (16) into an injection mould (1F) connected to the injection moulding arrangement (10), and a control arrangement (18) to control the actuator (14),
wherein the injection moulding arrangement (10) comprises a process parameter value determining arrangement (20) according to claim 13 and/or the control arrangement (18) is realised according to claim 14.

**Revendications**

1. Procédé de détermination et de visualisation de valeurs paramétriques de processus d'un processus de moulage par injection dans un moule d'injection (1F) comprenant

    - détermination de données géométriques du moule d'injection (1F) et/ou d'une partie de moule (1, 1', 1"), laquelle doit être fabriquée dans le moule par injection (1F),
    - Exécution d'un processus de moulage par injection en utilisant le moule d'injection (1F) et saisie des valeurs de mesure en fonction d'un temps d'injection et/ou d'une position d'actionneur (s),
    - détermination d'une position frontale d'écoulement à l'intérieur du moule d'injection (1F) ou de la partie de moule (1', 1") en fonction du temps d'injection et/ou de la position d'actionneur et le cas échéant d'une vitesse frontale d'écoulement en fonction de la position frontale d'écoulement en tant que valeurs paramétriques de processus sur la base des valeurs de mesure et des données géométriques du moule d'injection (1', F),
    - détermination en option d'autres valeurs paramétriques de processus en fonction du temps d'injection et/ou de la position d'actionneur et/ou de la position frontale d'écoulement,
    - affichage d'au moins une partie des valeurs paramétriques de processus en fonction du temps d'injection et/ou de la position d'actionneur et/ou de la position frontale d'écoulement sur un appareil d'affichage (31).

2. Procédé selon la revendication 1, sachant qu'au moins la position frontale d'injection est affichée, de préférence de façon dynamique, en fonction du temps d'injection et/ou de la position d'actionneur (s) sur le système d'affichage (31) à l'intérieur d'un moule d'injection virtuel et/ou d'une partie de moule virtuelle (1', 1").

3. Procédé selon la revendication 1 ou 2, sachant que la vitesse frontale d'écoulement et/ou au moins une des autres valeurs paramétriques de processus sont affichées, de préférence sous la forme de valeurs codifiées en couleur ou en gris en fonction de la position frontale d'écoulement à l'intérieur du moule d'injection virtuel et/ou d'une partie de moule virtuelle (1', 1").

4. Procédé selon l'une quelconque des revendications précédentes, sachant que les autres valeurs paramétriques de processus comprennent des valeurs paramétriques de processus non dépendantes de la machine, de préférence au moins une des grandeurs rhéologiques suivantes:

- vitesse de cisaillement
- viscosité à la fusion
- contrainte de poussée de paroi.

5. Procédé selon l'une quelconque des revendications précédentes, sachant que des valeurs paramétriques de commande de processus (v) sont affichées en plus en fonction de la durée d'injection et/ou de la position d'actionneur (s) et/ou de la position frontale d'écoulement.

6. Procédé selon l'une quelconque des revendications précédentes, sachant que les valeurs de mesure aux positions de mesure (50, 51, 52, 53, 54) sont déterminées en dehors ou à l'intérieur du moule d'injection (1F) et comprennent de préférence des valeurs de pression et/ou des valeurs de température.

7. Procédé selon l'une quelconque des revendications précédentes, sachant que les valeurs de mesure comprennent des valeurs de projection radiologiques (RP).

8. Procédé selon l'une quelconque des revendications précédentes, sachant que la détermination de la position frontale d'écoulement et/ou de la vitesse frontale d'écoulement ainsi que le cas échéant des autres valeurs paramétriques de processus dans le moule d'injection (1', F) sur la base des valeurs de mesure et des données géométriques du moule d'injection (1F), comprend les étapes de procédé suivantes:

- détermination d'une courbe de pression (ps) virtuelle spécifique à la partie de moule d'un processus de moulage par injection en utilisant les données géométriques,
- détermination d'un modèle d'événements spécifique à la partie de moule (Ms) sur la base de la courbe de pression virtuelle spécifique à la partie de moule (ps), sachant que le modèle d'événements spécifique à la partie de moule (Ms) comprend une pluralité d'événements virtuels ($E_{S1}$, $E_{S2}$, $E_{S3}$,...) singuliers, associés à des points d'événements caractéristiques ($F_1$, $F_2$, $F_3$,...) de la géométrie de partie de moule, auxquels est respectivement attribuée au moins une information de temps relative ($t_{S1}$, $t_{S2}$, $t_{S3}$,...) et/ou une position d'actionneur ainsi qu'au moins une donnée de position, laquelle définit une position d'un front de fusion (SF) du matériau de moulage par injection (KS) dans le moule d'injection (1F),
- exécution d'un processus de moulage par injection en utilisant le moule d'injection (1F) et détermination d'une courbe de pression de mesure ($p_m$) pendant le processus de moulage par injection,
- détermination d'un modèle d'événements de mesure ($M_m$) sur la base de la courbe de pression de mesure ($p_m$), sachant que le modèle d'événements de mesure ($M_m$) comporte une pluralité d'événements de mesure singuliers ($E_{m1}$, $E_{m2}$, $E_{m3}$,...), auxquels est respectivement attribuée une information de temps ($t_{m1}$, $t_{m2}$, $t_{m3}$,... ) et/ou une position d'actionneur,
- attribution d'événements virtuels ($E_{S1}$, $E_{S2}$, $E_{S3}$,...) du modèle d'événements spécifique à la partie de moule (Ms) pour des événements de mesure ($E_{m1}$, $E_{m2}$, $E_{m3}$,...) du modèle d'événements de mesure ($M_m$),
- déduction de valeurs paramétriques de processus sur la base des données de position attribuées aux événements virtuels ($E_{S1}$, $E_{S2}$, $E_{S3}$,...) et des informations de temps ($t_{m1}$, $t_{m2}$, $t_{m3}$,...) et/ou des positions d'actionneur attribuées aux événements de mesure ($E_{m1}$, $E_{m2}$, $E_{m3}$,...), lesquelles sont attribuées à ces événements virtuels ($E_{S1}$, $E_{S2}$, $E_{S3}$,...).

9. Procédé selon la revendication 8, sachant qu'en cas d'un débit volumique variable pendant le processus de moulage par injection, une courbe de pression de mesure déterminée à cet effet ($p_m$) est convertie en une courbe de pression de mesure corrigée en temps ($p_{mf}$), sur la base de laquelle le modèle d'événements de mesure ($M_m$) est ensuite déterminé.

10. Procédé selon la revendication 8 ou 9, sachant que les événements virtuels ($E_{S1}$, $E_{S2}$, $E_{S3}$,...) du modèle d'événements caractéristiques (Ms) sont déterminés sur la base de la variation temporelle de la pente de la courbe de pression virtuelle spécifique à la partie de moule (ps) et/ou sachant que les événements de mesure ($E_{m1}$, $E_{m2}$, $E_{m3}$,...) du modèle d'événements de mesure ($M_m$) sont déterminés sur la base de la variation temporelle de la pente de la courbe de pression de mesure ($p_m$).

11. Procédé de commande d'une installation de moulage par injection (10), sachant qu'

- avec un procédé selon l'une quelconque des revendications précédentes pour un premier procédé de moulage par injection avec un moule d'injection (1F), au moins la position de front d'écoulement et le cas échéant la vitesse de front d'écoulement à l'intérieur du moule d'injection (1F) ou de la partie de moule (1', 1") ainsi qu'en option d'autres valeurs paramétriques de processus dans le moule d'injection (1F) sont déterminées en fonction du temps d'injection et/ou de la position d'actionneur et sont au moins en partie affichées sur un système d'affichage (31),

- et une variation d'une fonction paramétrique de commande de processus en utilisant la position de front d'écoulement affichée et/ou la vitesse de front d'écoulement et/ou d'autres valeurs paramétriques de processus sont offertes,

- et lors de la réception d'un signal de commande, la fonction paramétrique de commande est utilisée dans un système de commande (18) de l'installation de moulage par injection (10) pour un autre processus de moulage par injection avec ce moule d'injection (1F).

12. Procédé selon la revendication 11, sachant qu'au moins une position à l'intérieur du moule d'injection (1F) ou de la partie de moule (1', 1") est repérée au moyen d'une interface d'utilisateur en utilisant le système d'affichage (18), position à laquelle est associée une vitesse de front d'écoulement et/ou une valeur paramétrique de processus et/ou une valeur paramétrique de commande de processus.

13. Système de détermination de valeur paramétrique de processus (20) pour déterminer et visualiser des valeurs paramétriques de processus d'un processus de moulage par injection dans un moule d'injection (1F) comprenant

- une première interface (21) pour déterminer des données géométriques du moule d'injection (1F) et/ou d'une partie de moule (1, 1', 1"), laquelle doit être fabriquée dans le moule d'injection (1F),
- une deuxième interface (24) pour la saisie de valeurs de mesure en fonction d'un temps d'injection et/ou d'une position d'actionneur (s) pendant un processus de moulage par injection sur une installation de moulage par injection (10) en utilisant le moule d'injection,
- une unité d'évaluation (26) pour déterminer une position de front d'écoulement à l'intérieur du moule d'injection (1F) ou de la partie de moule (1', 1") en fonction du temps d'injection et/ou de la position d'actionneur (s) et le cas échéant d'une vitesse de front d'écoulement en fonction de la position de front d'écoulement en tant que valeurs paramétriques de processus sur la base des valeurs de mesure et des données géométriques du moule d'injection (1F),
- un système de commande d'affichage (27) pour commander un système d'affichage afin de visualiser au moins une partie des valeurs paramétriques de processus déterminées en fonction du temps d'injection et/ou de la position d'actionneur et/ou de la position de front d'écoulement sur le système d'affichage (31).

14. Système de commande (18) pour une installation de moulage par injection (10), comprenant un système de détermination de valeur paramétrique de processus (20) selon la revendication 13, pour déterminer au moins un nombre de valeurs paramétriques de processus pour un premier processus de moulage par injection avec un moule d'injection (1F), la position de front d'écoulement et le cas échéant la vitesse de front d'écoulement à l'intérieur du moule d'injection (1F) ou de la partie de moule (1', 1") ainsi qu'en option d'autres valeurs paramétriques de processus dans le moule d'injection (1F) en fonction du temps d'injection et/ou de la position d'actionneur (s) et pour afficher au moins en partie sur un système d'affichage (31), sachant que le système de commande (18) est constitué de telle manière, qu'une variation d'une fonction paramétrique de commande de processus est offerte en utilisant la position de front d'écoulement et/ou la vitesse de front d'écoulement et/ou d'autres valeurs paramétriques de processus affichées et que lors de la réception d'un signal de commande, la fonction paramétrique de commande processus est utilisée dans un système de commande (18) de l'installation de moulage par injection (10) pour un autre processus de moulage par injection avec le moule d'injection (1F).

15. Installation de moulage par injection (10) avec une buse de moulage par injection, (16), un actionneur (14) pour injecter du matériau de moulage par injection (KS) de la buse de moulage par injection (16) dans un moule d'injection (1F) raccordé à l'installation de moulage par injection (10) et un système de commande (18) pour commander l'actionneur (14), sachant que l'installation de moulage par injection (10) comprend un système de détermination de valeur paramétrique de processus (20) selon la revendication 13 et/ou le système de commande (18) est constitué selon la revendication 14.

# Fig 1

## Fig 2

Fig 3

Fig 4

Fig 5

Fig 6

Fig 7

Fig 8

Fig 9

# Fig 10

Fig 11

# Fig 12a

12.I

12.II
$$j = 0$$
$$i = 1$$
$$f_k = f_{start}$$

12.III
$$E_{k,i} = f_k \cdot E_{S,i}$$
$$E_{k,i+1} = f_k \cdot E_{S,i+1}$$

12.IV
$$\Delta E_{k,i} = E_{k,i+1} - E_{k,i}$$
$$\Delta E_{m,i+j} = E_{m,i+j+1} - E_{m,i+j}$$

12.V
$$S_{k,i} = \Delta E_{m,i+j} - \Delta E_{k,i}$$

12.VI $\quad i=n$

no

$$i := i+1$$
12.VII

y

12.VIII
$$S_k = \left| \sum_{i=1}^{n} S_{k,i} \right|$$

a

b c d

Fig 12b

Fig 13

Fig 14

Fig 15

1''

Fig 16

Fig 17

Fig 18

Fig 19

# Fig 20

Fig 21

1''

SF

KS

Fig 22

Fig 23

# Fig 24

Fig 25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 96218317 T2
- EP 0525198 B1
- DE 96215634 T2
- EP 0535243 B1